(19) Europäisches Patentamt
European Patent Office
Office européen des brevets

(11) **EP 4 596 590 A1**

(12) **EUROPEAN PATENT APPLICATION**
published in accordance with Art. 153(4) EPC

(43) Date of publication:
**06.08.2025 Bulletin 2025/32**

(21) Application number: 23872069.2

(22) Date of filing: **20.09.2023**

(51) International Patent Classification (IPC):
*C08F 20/36* (2006.01)     *C08F 290/14* (2006.01)
*C08F 299/06* (2006.01)     *C08F 2/18* (2006.01)
*C08L 63/00* (2006.01)

(52) Cooperative Patent Classification (CPC):
**C08F 2/18; C08F 20/36; C08F 290/14;**
**C08F 299/06;** C08L 63/00

(86) International application number:
**PCT/JP2023/034061**

(87) International publication number:
**WO 2024/070841 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.09.2022 JP 2022156214**

(71) Applicant: **Zeon Corporation**
**Tokyo 100-8246 (JP)**

(72) Inventor: **YAGYU, Sakyo**
**Tokyo 100-8246 (JP)**

(74) Representative: **Kraus & Lederer PartGmbB**
**Thomas-Wimmer-Ring 15**
**80539 München (DE)**

(54) **HOLLOW PARTICLES, METHOD FOR MANUFACTURING HOLLOW PARTICLES, RESIN COMPOSITION, RESIN STRUCTURE, AND METHOD FOR MANUFACTURING RESIN STRUCTURE**

(57)     To provide hollow particles in which a deterioration in pressure resistance at high temperature is suppressed. Hollow particles comprising a shell, which contains a resin, and a hollow portion surrounded by the shell, wherein the resin contains at least one selected from the group consisting of a urethane bond and a urea bond, and a structure formed by polymerization of a (meth)acryloyl group; wherein the hollow particles have an average circularity of 0.90 or more; wherein a ratio (D90/D50) of D90 (a particle diameter at 90% cumulative volume of the hollow particles) to D50 (a particle diameter at 50% cumulative volume thereof) is 1.70 or less; and wherein a breaking strength of the hollow particles when compressed by a micro compression testing machine at a temperature of 150°C, a maximum compression breaking test force of 2000 mN and a loading rate of 0.0466 mN/s, is 5.0 MPa or more.

EP 4 596 590 A1

**Description**

Technical Field

The present disclosure relates to hollow particles, a method for producing the hollow particles, a resin composition comprising the hollow particles, a resin structure comprising the hollow particles, and a method for producing the resin structure.

Background Art

Hollow particles have a hollow in their interior. Accordingly, they are added and used in resins, coating materials, various kinds of molded products and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

As a material for forming the shell of hollow particles, a resin (such as a vinyl resin, an acrylic resin, a polyurethane resin, a polyurea resin and a melamine resin) or an inorganic material (such as silica) is used.

Among hollow particles comprising a shell which contains a resin as a main component, that is, among hollow resin particles, those comprising a shell of a polyurethane or polyurea resin are used in various kinds of applications, due to having excellent heat resistance, flexibility and so on (e.g., Patent Documents 1 and 2).

Patent Document 3 describes hollow particles comprising a shell of an acrylic resin, which are obtained by use of a trifunctional or higher-functional monomer containing a (meth)acryloyloxy group.

Citation List

Patent Documents

Patent Document 1: International Publication No. WO2019/181988
Patent Document 2: Japanese Patent Application Laid-Open (JP-A) No. 2022-117594
Patent Document 3: JP-A No. 2020-033503

Summary

Technical Problem

However, conventional hollow particles comprising a shell of a polyurethane or polyurea resin is likely to deform at high temperature. Accordingly, they are difficult to use in applications where they are exposed to external force at high temperature, such as being added to a resin used for injection molding. Meanwhile, hollow particles comprising a shell of an acrylic resin are fragile, and they are insufficient in pressure resistance, accordingly.

An object of the present disclosure is to provide hollow particles that a deterioration in pressure resistance at high temperature is suppressed, a method for producing the hollow particles, a resin composition comprising the hollow particles, a resin structure comprising the hollow particles, and a method for producing the resin structure.

Solution to Problem

The inventor of the present disclosure found that hollow particles having the following properties are excellent in pressure resistance even at high temperature: the shell is formed by use of a resin which contains at least one selected from the group consisting of a urethane bond and a urea bond, and a structure formed by polymerization of a (meth)acryloyl group; the average circularity of the particles is 0.90 or more; and in the volume-based particle size distribution of the particles, the D90/D50 ratio is 1.70 or less. Based on the finding, the inventor achieved the present disclosure.

According to the present disclosure, there are provided hollow particles comprising a shell, which contains a resin, and a hollow portion surrounded by the shell,

wherein the resin contains at least one selected from the group consisting of a urethane bond and a urea bond, and a structure formed by polymerization of a (meth)acryloyl group;
wherein the hollow particles have an average circularity of 0.90 or more;
wherein a ratio (D90/D50) of D90, which is a particle diameter at 90% cumulative volume of the hollow particles, to D50, which is a particle diameter at 50% cumulative volume of the hollow particles, is 1.70 or less; and
wherein a breaking strength of the hollow particles when compressed by a micro compression testing machine at a temperature of 150°C, a maximum compression breaking test force of 2000 mN and a loading rate of 0.0466 mN/s, is 5.0 MPa or more.

In an infrared absorption spectrum obtained by measuring the hollow particles of the present disclosure by ATR-FTIR, an absorbance ratio (A1/A2) of an absorbance A1, which is an absorbance at a maximum peak in a range of from 1500 cm$^{-1}$ to 1550 cm$^{-1}$, to an absorbance A2, which is an absorbance at a maximum peak in a range of from 1700 cm$^{-1}$ to 1750 cm$^{-1}$, is preferably 0.1 or more and 0.5 or less.

In the hollow particles of the present disclosure, the urea bond is preferably a urea bond formed by a reaction of a polyamine with an isocyanate group-containing compound.

In the hollow particles of the present disclosure, the urethane bond is preferably a urethane bond formed by a reaction of at least one active hydrogen compound selected from the group consisting of a hydroxy group-containing compound and an epoxy group-containing compound with an isocyanate group-containing compound, and the hydroxy group-containing compound is preferably at least one selected from the group consisting of a polyester polyol, a polyether polyol, an aliphatic polyol, a (meth)acrylic polymer polyol and a hydroxy group-containing (meth)acrylate, and the epoxy group-containing compound is preferably a polyvalent epoxy compound.

The hollow particles of the present disclosure preferably have a void ratio of 60% or more and 85% or less.

According to the present disclosure, there is provided a method for producing the hollow particles, the method comprising:

preparing a mixture liquid containing a shell material, a hydrophobic solvent, a dispersion stabilizer and an aqueous medium,
suspending the mixture liquid to prepare a suspension in which droplets of a shell material composition containing the shell material and the hydrophobic solvent are dispersed in the aqueous medium,
polymerizing the shell material to form precursor particles comprising a shell, which contains a resin, and a hollow portion, which is surrounded by the shell and filled with the hydrophobic solvent, and
removing the hydrophobic solvent from the precursor particles,
wherein the shell material comprises at least one selected from the group consisting of:

(i) a mixture of an isocyanate group-containing compound and an active hydrogen compound,

wherein at least one of the compounds contains a (meth)acryloyl group;
wherein the active hydrogen compound is at least one selected from the group consisting of an amino group-containing compound, a hydroxy group-containing compound and an epoxy group-containing compound; and
wherein at least one of a condition that the isocyanate group-containing compound contains two or more isocyanate groups per molecule, or a condition that the active hydrogen compound contains, per molecule, two or more groups of at least one kind selected from the group consisting of amino, hydroxy and epoxy groups, is satisfied,

(ii) at least one selected from the group consisting of a urethane bond-containing (meth)acrylate and a urea bond-containing (meth)acrylate, and
(iii) a mixture of an isocyanate group-containing compound, an active hydrogen compound and a (meth)acryloyl group-containing compound,

wherein the active hydrogen compound is at least one selected from the group consisting of an amino group-containing compound, a hydroxy group-containing compound and an epoxy group-containing compound, and
wherein, in the polymerization of the shell material, at least one selected from the group consisting of the following reactions proceeds:

a reaction of the isocyanate group with at least one selected from the group consisting of the amino group, the hydroxy group and the epoxy group, and
a radical polymerization reaction of the (meth)acryloyl group.

According to the present disclosure, there is provided a resin composition comprising the hollow particles of the present disclosure and a matrix resin.

According to the present disclosure, there is provided a resin structure comprising the hollow particles of the present disclosure and a matrix resin.

According to the present disclosure, there is provided a method for producing a resin structure, the method comprising:

preparing a resin composition containing the hollow particles of the present disclosure, a matrix resin and a curing agent, and

curing the resin composition.

Advantageous Effects of Invention

According to the present disclosure described above, hollow particles in which a deterioration in pressure resistance at high temperature is suppressed, can be provided. In addition, the present disclosure provides a method for producing the hollow particles, a resin composition comprising the hollow particles, a resin structure comprising the hollow particles, and a method for producing the resin structure.

Brief Description of Drawing

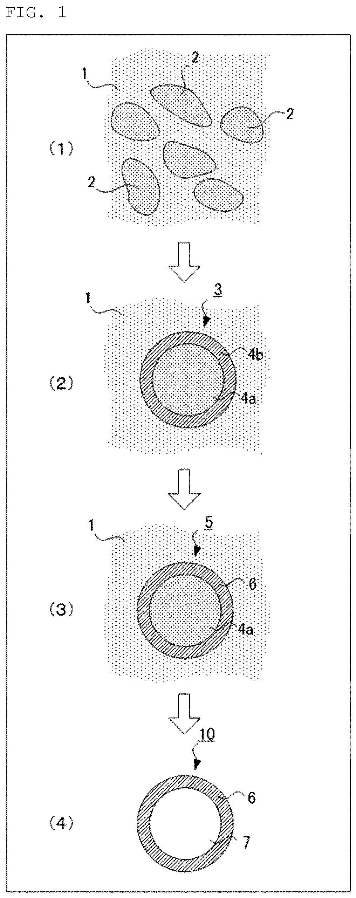

[FIG. 1] FIG. 1 is a diagram illustrating an example of the method for producing the hollow particles of the present disclosure.

Description of Embodiments

The hollow particles of the present disclosure are hollow particles comprising a shell, which contains a resin, and a hollow portion surrounded by the shell,

wherein the resin contains at least one selected from the group consisting of a urethane bond and a urea bond, and a structure formed by polymerization of a (meth)acryloyl group;

wherein the hollow particles have an average circularity of 0.90 or more;

wherein a ratio (D90/D50) of D90, which is a particle diameter at 90% cumulative volume of the hollow particles, to D50, which is a particle diameter at 50% cumulative volume of the hollow particles, is 1.70 or less; and

wherein a breaking strength of the hollow particles when compressed by a micro compression testing machine at a temperature of 150°C, a maximum compression breaking test force of 2000 mN and a loading rate of 0.0466 mN/s, is 5.0 MPa or more.

A urea bond is a structure represented by -NH-CO-NH-. For example, it is formed by a reaction of an isocyanate group (-NCO) and an amino group ($-NH_2$).

A urethane bond is a structure represented by -NH-CO-O- or -O-CO-NH-. For example, it is formed by a reaction of an isocyanate group (-NCO) and a hydroxy group (-OH). Since an epoxy group opens the ring to give a hydroxy group by contact with acid or base, a urethane bond is formed by reacting an isocyanate group (-NCO) with an epoxy group in an acidic or basic condition. In some cases, an oxazolidone ring may be formed by the reaction of an isocyanate group with an epoxy group.

When a urethane bond is reacted with an isocyanate group, an allophanate bond (-NH-CO-N-CO-O-) is formed.

Hollow particles have a void in the interior and comprise a thin-walled shell. Accordingly, compared to resin particles in which the interior is filled with resin, hollow particles are likely to deform or break when exposed to external force, that is, they tend to be poor in pressure resistance. The pressure resistance of conventional hollow particles comprising a shell of a polyurethane or polyurea resin, is likely to deteriorate at high temperature. The reason is presumed as follows: since the shell-forming resin has poor crosslinking density, the shell is likely to be softened or thermally decomposed at high temperature, and the stiffness of the shell decreases at high temperature. In the present disclosure, "at high temperature" may be an environment at a temperature of from 150°C to 300°C.

Meanwhile, in the hollow particles of the present disclosure, the shell-forming resin contains both the at least one selected from the group consisting of a urethane bond and a urea bond, and the structure formed by polymerization of a (meth)acryloyl group; the average circularity of the particles is 0.90 or more; and the D90/D50 ratio is 1.70 or less. Accordingly, it is presumed that the hollow particles of the present disclosure have better elasticity and strength than conventional hollow particles, and since the better elasticity and strength can be easily maintained at high temperature, excellent pressure resistance is exerted by the hollow particles even at high temperature.

The at least one selected from the group consisting of a urethane bond and a urea bond, has a flexible structure and forms a hydrogen bond in resin. Accordingly, while imparting flexibility to the shell, it increases the shell stiffness by the hydrogen bond formation. Since the structure formed by polymerization of a (meth)acryloyl group has high stiffness, it imparts further stiffness to the shell.

Also, the hollow particles of the present disclosure have an average circularity of 0.90 or more and a D90/D50 ratio of 1.70 or less. That is, the hollow particles have sufficiently high uniformity in shape and size. Hollow particles having a low average circularity are thought to be deformed by an insufficient polymerization reaction of the raw materials. Hollow particles having a large D90/D50 ratio are thought to develop a reaction between the particles and produce coarse particles, accordingly. The reason why the hollow particles present disclosure has an average circularity of 0.90 or more and a D90/D50 ratio of 1.70 or less, is thought to be due to sufficient development of the raw materials in the shell, and the crosslinking density of the shell of the hollow particles of the present disclosure is presumed to be sufficiently high, accordingly.

The particles having high uniformity in shape and size as described above, are likely to be uniformly exposed to external force. Accordingly, the elasticity and strength of the particles are effectively exerted, resulting in a further improvement of the pressure resistance.

In addition, it is presumed that since the structure formed by polymerization of a (meth)acryloyl group retains the crosslinking structure of the resin and the shape of the particles even at high temperature, a decrease in the stiffness of the shell of the hollow particles of the present disclosure at high temperature and a decrease in the uniformity thereof are suppressed, and the hollow particles keep excellent pressure resistance even at high temperature.

Thus, it is presumed that the hollow particles of the present disclosure have a synergy between the structure that is at least one selected from the group consisting of a urethane bond and a urea bond and the structure formed by polymerization of a (meth)acryloyl group; they comprise the shell with sufficiently high crosslinking density; and they have excellent uniformity in shape and size. Accordingly, the hollow particles of the present disclosure have excellent pressure resistance, and they exert excellent pressure resistance even at high temperature since the crosslinking structure of the shell-forming resin and the shape of the particles are likely to be retained.

Hereinafter, an example of the method for producing the hollow particle of the present disclosure will be described. Then, the hollow particles of the present disclosure will be described in more detail.

In the present disclosure, "to" which shows a numerical range is used to describe a range in which the numerical values described before and after "to" indicate the lower limit value and the upper limit value.

1. Method for producing the hollow particles

The hollow particles of the present disclosure are typically produced by the production method described below, which is based on the suspension polymerization method.

As the hollow particle production method of the present disclosure, for example, there is provided a method comprising:

preparing a mixture liquid containing a shell material, a hydrophobic solvent, a dispersion stabilizer and an aqueous medium,
suspending the mixture liquid to prepare a suspension in which droplets of a shell material composition containing the shell material and the hydrophobic solvent are dispersed in the aqueous medium,
polymerizing the shell material to form precursor particles comprising a shell, which contains a resin, and a hollow portion, which is surrounded by the shell and filled with the hydrophobic solvent, and
removing the hydrophobic solvent from the precursor particles.

In the present disclosure, the raw material for the resin contained in the shell is referred to as "shell material", and the polymerization initiator is not included in the shell material. In the present disclosure, the term "shell material composition" is a composition containing the shell material.

In the present disclosure, the term "polymerization of shell material" may be a reaction such that the compounds contained in the shell material are bound by covalent bonding, and it may be any one of a reaction of the isocyanate group-containing compound with the active hydrogen compound, a polymerization reaction of the (meth)acryloyl group, and the combination thereof.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" is a composition containing the precursor particles.

In the suspension polymerization method, by suspending the mixture liquid containing the shell material, the hydrophobic solvent, the dispersion stabilizer and the aqueous medium, phase separation occurs between the shell material and the hydrophobic solvent. Accordingly, the suspension in which droplets of the shell material composition are dispersed in the aqueous medium, the droplets having a distribution structure such that the shell material is distributed on the surface side and the hydrophobic solvent is distributed in the center, is prepared. By subjecting the suspension to a polymerization reaction, resin (a polymer) starts to precipitate on the surface of the droplets of the shell material composition, and the polymerization reaction is further developed. Accordingly, the surface of the droplets is cured to form the shell, thereby obtaining the hollow particles having the hollow portion filled with the hydrophobic solvent.

In the method as described in Patent Document 2, the method employing interfacial polymerization, the isocyanate group-containing compound is likely to react with water, and the crosslinking density of the shell-forming resin is difficult to increase, accordingly. In the present disclosure, by use of the suspension polymerization-based method as described above, the shell having a sufficiently high crosslinking density can be formed, and the hollow particles whose pressure resistance is less likely to deteriorate at high temperature, can be produced.

The above-described production method includes the steps of preparing the mixture liquid, preparing the suspension, polymerizing the shell material, and removing the included solvent from the particles. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (for example, the mixture liquid may be suspended while adding the materials for the mixture liquid).

A preferred embodiment of the method for producing the hollow particles of the present disclosure may be a production method including the following steps.

(1) Mixture liquid preparation step
The mixture liquid preparation step includes preparing a mixture liquid containing a shell material, a hydrophobic solvent, a dispersion stabilizer and an aqueous medium.
(2) Suspension step
The suspension step includes suspending the mixture liquid to prepare a suspension in which droplets of a shell material composition containing the shell material and the hydrophobic solvent are dispersed in the aqueous medium.
(3) Polymerization step
The polymerization step includes polymerizing the shell material to form precursor particles comprising a shell, which contains a resin, and a hollow portion, which is surrounded by the shell and filled with the hydrophobic solvent.
(4) Solvent removal step
The solvent removal step includes removing the hydrophobic solvent from the precursor particles to obtain the hollow particles.

FIG. 1 is a schematic diagram showing an example of the production method of the present disclosure. The diagrams (1) to (4) in FIG. 1 correspond to the steps (1) to (4) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the shell material and the hydrophobic solvent.

The diagram (2) of FIG. 1 is a schematic cross-sectional view showing an embodiment of the suspension in the suspension step. The suspension contains the aqueous medium 1 and droplets 3 of the shell material composition dispersed in the aqueous medium 1. The droplets 3 of the shell material composition contain the shell material and the hydrophobic solvent, and their distribution in the droplets is not uniform. The droplets 3 of the shell material composition have the following structure: phase separation occurs between a hydrophobic solvent 4a and a material 4b containing the shell material and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor particles obtained by the polymerization step, in which the hollow portion is filled with the hydrophobic solvent. Precursor particles 5 comprise a shell 6, which contains a resin, and a hollow portion, which is filled with the hydrophobic solvent 4a. The shell 6 forming the outer surface of the precursor particles 5 is formed by polymerization of the shell material contained in the droplets 3 of the shell material composition. In the diagram (3) of FIG. 1, the precursor particles 5 are dispersed in the aqueous medium 1.

The diagram (4) of FIG. 1 is a schematic cross-sectional view showing an embodiment of the hollow particles after the solvent removal step. The diagram (4) of FIG. 1 shows a state where the aqueous medium 1 and the hydrophobic solvent 4a have been removed from the state shown in the diagram (3) of FIG. 1. By the removal of the included hydrophobic solvent from the precursor particles, hollow particles 10 having a gas-filled hollow portion 7 in the interior of the shell 6, are obtained.

Hereinafter, the four steps described above and other steps will be described in order.

(1) Mixture liquid preparation step

The mixture liquid preparation step includes preparing a mixture liquid containing a shell material, a hydrophobic solvent, a dispersion stabilizer and an aqueous medium. When the shell material contains a (meth)acryloyl group-containing compound, the mixture liquid preferably further contains a polymerization initiator.

The mixture liquid may further contain other materials to the extent that does not impair the effects of the present disclosure.

The materials for the mixture liquid will be described in the following order: (A) the shell material, (B) the hydrophobic solvent, (C) the polymerization initiator, (D) the dispersion stabilizer and (E) the aqueous medium.

(A) Shell material

The shell material is not particularly limited, as long as it is a material that can form a resin containing at least one selected from the group consisting of a urethane bond and a urea bond, and a structure formed by polymerization of a (meth)acryloyl group. For example, a shell material containing at least one selected from the group consisting of the following (i), (ii) and (iii), is preferably used.

(i) A mixture of an isocyanate group-containing compound and an active hydrogen compound, wherein at least one of the compounds contains a (meth)acryloyl group; wherein the active hydrogen compound is at least one selected from the group consisting of an amino group-containing compound, a hydroxy group-containing compound and an epoxy group-containing compound; and wherein at least one of a condition that the isocyanate group-containing compound contains two or more isocyanate groups per molecule, or a condition that the active hydrogen compound contains, per molecule, two or more groups of at least one kind selected from the group consisting of amino, hydroxy and epoxy groups, is satisfied.

(ii) At least one selected from the group consisting of a urethane bond-containing (meth)acrylate and a urea bond-containing (meth)acrylate.

(iii) A mixture of an isocyanate group-containing compound, an active hydrogen compound and a (meth)acryloyl group-containing compound, wherein the active hydrogen compound is at least one selected from the group consisting of an amino group-containing compound, a hydroxy group-containing compound and an epoxy group-containing compound.

The shell material may contain only one selected from the group consisting of the above (i), (ii) and (iii), or it may contain a combination of two or more of them. For example, the shell material may contain a combination of the compound mixture of the (i) and the compound of the above (ii).

From the point of view that the pressure resistance of the hollow particles can be easily improved and a deterioration in the pressure resistance at high temperature can be easily suppressed, the shell material preferably contains at least one selected from the group consisting of the above (i) and (ii), and it particularly preferably contains the compound mixture of the (i).

In the present disclosure, the isocyanate group-containing compound is a compound containing one or more isocyanate groups per molecule, and a compound containing two or more isocyanate groups per molecule is referred to as polyisocyanate. The isocyanate group-containing compound also encompasses a compound in which the reaction activity of the isocyanate group is decreased by reacting the isocyanate group with a ketone, an alcohol, an oxime or the like and the ketone or the like is made eliminable when needed.

The amino group-containing compound is a compound containing one or more amino groups per molecule, and a compound containing two or more amino groups per molecule is referred to as polyamine. The amino group contained in the amino group-containing compound reacts with an isocyanate group to form a urea bond, and it is preferably a primary amino group or an aliphatic secondary amino group.

The hydroxy group-containing compound is a compound containing one or more hydroxy groups per molecule, and a compound containing two or more hydroxy groups per molecule is referred to as polyol. The hydroxy group contained in the hydroxy group-containing compound reacts with an isocyanate group to form a urethane bond.

The epoxy group-containing compound is a compound containing one or more epoxy groups per molecule, and a compound containing two or more epoxy groups per molecule is referred to as polyvalent epoxy compound. The epoxy group contained in the epoxy group-containing compound opens the ring by contact with an acid or base to give a hydroxy group, and the hydroxy group reacts with an isocyanate group to form a urethane bond.

In the present disclosure, the (meth)acryloyl group-containing compound is a compound containing one or more (meth)acryloyl groups per molecule. Of such compounds, a (meth)acrylic ester may be referred to as (meth)acrylate, and a polymer obtained by polymerization reaction of (meth)acryloyl groups may be referred to as (meth)acrylic polymer. A (meth)acrylate containing only one (meth)acryloyl group per molecule is referred to as monofunctional (meth)acrylate. A (meth)acrylate containing two or more (meth)acryloyl groups per molecule is referred to as polyfunctional (meth)acrylate.

In the present disclosure, the term "(meth)acrylate" represents at least one selected from the group consisting of an acrylate and a methacrylate; the term "(meth)acryl" represents at least one selected from the group consisting of an acryl and a methacryl; and the term "(meth)acryloyl" represents at least one selected from the group consisting of an acryloyl and a methacryloyl. That is, the structure formed by polymerization of a (meth)acryloyl group means a structure formed by polymerization of at least one selected from the group consisting of an acryloyl group and a methacryloyl group.

As the compound mixture of the (i), examples include, but are not limited to, the following mixtures (i-1) to (i-4).

(i-1) A mixture of an isocyanate group-containing (meth)acrylate which contains one isocyanate group per molecule and at least one active hydrogen compound selected from the group consisting of a polyamine, a polyol and a polyvalent epoxy compound.

(i-2) A mixture of an isocyanate group-containing (meth)acrylate which contains one isocyanate group per molecule and a hydroxy group-containing (meth)acrylate which contains two or more hydroxy groups per molecule.

(i-3) A mixture of a polyisocyanate and at least one active hydrogen compound selected from the group consisting of an amino group-containing (meth)acrylate which contains one amino group per molecule, a hydroxy group-containing (meth)acrylate which contains one hydroxy group per molecule, and an epoxy group-containing (meth)acrylate which contains one epoxy group per molecule.

(i-4) A mixture of a polyisocyanate and a hydroxy group-containing (meth)acrylate which contains two or more hydroxy groups per molecule.

From the point of view that the pressure resistance of the hollow particles can be easily improved and a deterioration in the pressure resistance at high temperature can be easily suppressed, the (meth)acrylate used above, such as the isocyanate group-containing (meth)acrylate and so on, is preferably a polyfunctional (meth)acrylate which contains two or more (meth)acryloyl groups per molecule

From the viewpoint of ease of obtaining the hollow particles whose pressure resistance can be easily improved and is less likely to deteriorate at high temperature, among the above mixtures (i-1) to (i-4), the mixtures (i-1) and (i-2) in both of which an isocyanate group-containing polyfunctional (meth)acrylate is used as the isocyanate group-containing (meth)acrylate, and the mixtures (i-3) and (i-4) are preferred.

Hereinafter, examples of the compounds used in the mixtures (i-1) to (i-4) will be described. The compounds described below may be used alone or in combination of two or more, from the following examples.

As the isocyanate group-containing (meth)acrylate which contains one isocyanate group per molecule, examples include, but are not limited to, an isocyanate group-containing monofunctional (meth)acrylate such as 2-isocyanatoethyl (meth)acrylate and 2-(2-(meth)acryloyloxyethyloxy)ethyl isocyanate, and an isocyanate group-containing polyfunctional (meth)acrylate such as 1,1-(bisacryloyloxymethyl)ethyl isocyanate.

As the polyisocyanate, examples include, but are not limited to, an aliphatic polyisocyanate such as ethylene diisocyanate, pentamethylene diisocyanate, hexamethylene diisocyanate, 2,2,4-trimethylhexamethylene diisocyanate, lysine diisocyanate, cyclohexane diisocyanate, isophorone diisocyanate, dicyclohexane diisocyanate, dicyclohexylmethane diisocyanate, hydrogenated xylylene diisocyanate and norbornene diisocyanate, and an aromatic polyisocyanate such as phenylene diisocyanate, toluene diisocyanate, diphenylmethane diisocyanate, xylylene diisocyanate, tetramethylxylene diisocyanate, naphthalene diisocyanate, polymethylene polyphenyl polyisocyanate and carbodiimidized diphenylmethane polyisocyanate.

As the amino group-containing (meth)acrylate which contains one amino group per molecule, examples include, but are not limited to, an amino group-containing monofunctional (meth)acrylate such as tert-butylaminoethyl (meth)acrylate and 2-aminoethyl (meth)acrylate.

As the polyamine, examples include, but are not limited to, an aromatic polyamine, an aliphatic polyamine, an alicyclic polyamine, a polyetheramine, a piperazine-based amine and a norbornane-based polyamine.

As the aromatic polyamine, examples include, but are not limited to, a low-molecular-weight aromatic polyamine such as m-phenylenediamine, diethyltoluenediamine, 4,4'-diamino-3,3'-dichlorodiphenylmethane and trimethylene-bis(4-aminobenzoate), and a high-molecular-weight aromatic polyamine such as polytetramethylene oxide-di-p-aminobenzoate.

As the aliphatic polyamine, examples include, but are not limited to, ethylenediamine, hexamethylenediamine, 1,5-diamino-2-methylpentane and triethylenetetramine.

As the alicyclic polyamine, examples include, but are not limited to, isophoronediamine and 1,3-bisamino-methylcyclohexane.

**EP 4 596 590 A1**

As the piperazine-based amine, examples include, but are not limited to, N-aminoethylpiperazine.

As the polyetheramine, examples include, but are not limited to, polyoxyethylenediamine and O,O'-bis(2-aminopropyl)polyethylene glycol.

As the norbornane-bsed polyamine, examples include, but are not limited to, norbornane diamine.

From the point of view that the pressure resistance of the hollow particles can be easily improved and a deterioration in the pressure resistance at high temperature can be easily suppressed, the polyamine is preferably an aliphatic polyamine, and more preferably an alkylpolyamine containing 2 to 6 carbon atoms.

As the hydroxy group-containing (meth)acrylate which contains one hydroxy group per molecule, examples include, but are not limited to, a hydroxy group-containing monofunctional (meth)acrylate such as 2-hydroxyethyl (meth) acrylate, 3-hydroxypropyl (meth)acrylate, 4-hydroxybutyl (meth)acrylate, 2-hydroxypropyl (meth)acrylate, 2-hydroxybutyl (meth)acrylate, 3-hydroxybutyl (meth)acrylate, hydroxycyclohexyl (meth)acrylate, 3-(meth)acryloyloxy-2-hydroxypropyl (meth)acrylate and N-methylol (meth)acrylamide, and a hydroxy group-containing polyfunctional (meth)acrylate such as 2-hydroxy-1,3-dimethacryloxypropane, polyethylene glycol mono (meth) acrylate, polypropylene glycol mono(meth) acrylate, pentaerythritol tri(meth)acrylate, dipentaerythritol penta(meth)acrylate and sorbitol penta(meth)acrylate.

As the hydroxy group-containing (meth)acrylate which contains two or more hydroxy groups pre molecule, examples include, but are not limited to, a hydroxy group-containing monofunctional (meth)acrylate such as pentaerythritol mono(meth)acrylate and dipentaerythritol mono(meth)acrylate, and a hydroxy group-containing polyfunctional (meth)acrylate such as pentaerythritol di(meth)acrylate, dipentaerythritol di(meth)acrylate, dipentaerythritol tri(meth) acrylate, dipentaerythritol tetra(meth)acrylate, sorbitol tri(meth)acrylate and sorbitol tetra(meth)acrylate.

As the polyol, examples include, but are not limited to, polyester polyol, polyether polyol, aliphatic polyol and (meth)acrylic polymer polyol. The above-described hydroxy group-containing (meth)acrylate which contains two or more hydroxy groups per molecule, is also a polyol.

As the polyester polyol, examples include, but are not limited to, a condensation polyester obtained by condensation polymerization of one or more dicarboxylic acids selected from the group consisting of succinic acid, glutaric acid, adipic acid, sebacic acid, azelaic acid, maleic acid and the like, and one or more glycols selected from the group consisting of ethylene glycol (EG), 1,3-propylene glycol, 1,4-butanediol (BD), 1,6-hexanediol, neopentyl glycol (NPG), 3-methyl-1,5-pentanediol, 2,4-diethyl-1,5-pentanediol, 1,8-octanediol, 1,10-decanediol, diethylene glycol and the like, and a ring-opened polyester obtained by ring-opening addition polymerization of a lactone (such as ε-caprolactone and valerolactone) using the above-described glycol as a polymerization initiator component for the polyester. From the point of view that the pressure resistance of the hollow particles can be easily improved by increasing the crosslinking density of the shell and a deterioration in the pressure resistance at high temperature can be easily suppressed, the polyester polyol preferably has a molecular weight in a range of from 1000 to 3000.

As the polyether polyol, examples include, but are not limited to, a polyoxyalkylene polyol which contains two or more oxyalkylene units and two or more hydroxy groups per molecule. As the polyoxyalkylene polyol, examples include, but are not limited to, a homopolymer of an oxyalkylene polyol such as polyoxyethylene polyol, polyoxypropylene polyol and polyoxytetramethylene glycol, a copolymer of two or more kinds of oxyalkylene polyols, and a copolymer obtained by addition polymerization of an alkylene oxide to an initiator such as an alkylene glycol. As the copolymer of two or more kinds of oxyalkylene polyols, examples include, but are not limited to, a copolymer which contains a polymethylene oxide unit represented by the following formula (1) and a polyalkylene oxide unit represented by the following formula (2) and in which two or more terminals are hydroxy groups.

$$-[(CH_2)_mO]- \qquad (1)$$

$$-[(CXH)_nO]- \qquad (2)$$

In the formula (1), m is an integer of from 2 to 10, and it is preferably an integer of from 3 to 6.

In the formula (2), n is an integer of from 3 to 10; it is preferably an integer of from 3 to 6; and at least one of n X's is an alkyl group, and the rest is a hydrogen atom.

From the point of view that the pressure resistance of the hollow particles can be easily improved by increasing the crosslinking density of the shell and a deterioration in the pressure resistance at high temperature can be easily suppressed, the polyether polyol is preferably a copolymer obtained by addition copolymerization of an alkylene oxide to an alkylene glycol. The alkylene glycol is preferably an alkylene glycol containing 2 to 6 carbon atoms. The alkylene oxide is preferably an alkylene oxide containing 2 to 6 carbon atoms.

In the present disclosure, the aliphatic polyol is a saturated aliphatic polyhydric alcohol. As the aliphatic polyol, examples include, but are not limited to, ethylene glycol, 1,2-propanediol, 1,3-propanediol, 1,3-butanediol, 1,4-butanediol, 1,5-pentanediol, 1,6-hexanediol, 3-methyl-1,5-pentanediol (MPD), 2-methyl-1,8-octanediol (MOD), neopentyl glycol, glycerol, trimethylolpropane and pentaerythritol. From the point of view that the pressure resistance of the hollow particles can be easily improved by increasing the crosslinking density of the shell and a deterioration in the pressure resistance at high temperature can be easily suppressed, the aliphatic polyol is preferably an aliphatic polyol which contains three or more hydroxy groups per molecule, such as pentaerythritol, glycerol or the like.

As the (meth)acrylic polymer polyol, examples include, but are not limited to, a homopolymer or copolymer of the above-described hydroxy group-containing (meth)acrylate. From the point of view that the pressure resistance of the hollow particles can be easily improved by increasing the crosslinking density of the shell and a deterioration in the pressure resistance at high temperature can be easily suppressed, the (meth)acrylic polymer polyol preferably has a weight average molecular weight in a range of from 1000 to 20000. The hydroxy group-containing (meth)acrylate used for the synthesis of the (meth)acrylic polymer polyol is preferably a hydroxy group-containing polyfunctional (meth)acrylate.

As the epoxy group-containing (meth)acrylate which contains one epoxy group per molecule, examples include, but are not limited to, an epoxy group-containing monofunctional (meth)acrylate such as glycidyl (meth)acrylate, epoxycyclohexylmethyl (meth)acrylate and a mono (meth) acrylated compound of a diglycidyl ether compound such as bisphenol diglycidyl ether.

As the polyvalent epoxy compound, examples include, but are not limited to, the following: a glycidyl ether type epoxy compound such as bisphenol A diglycidyl ether, bisphenol A di-β-methyl glycidyl ether, bisphenol F diglycidyl ether, tetrahydroxyphenylmethane tetraglycidyl ether, resorcinol diglycidyl ether, brominated bisphenol A diglycidyl ether, chlorinated bisphenol A diglycidyl ether, hydrogenated bisphenol A diglycidyl ether, diglycidyl ether of bisphenol A alkylene oxide adduct, novolac glycidyl ether, polyalkylene glycol diglycidyl ether, glycerin triglycidyl ether and pentaerythritol diglycidyl ether; a diglycidyl ether-ester type epoxy compound such as p-oxybenzoic acid glycidyl ether-ester; a glycidyl ester type epoxy compound such as phthalic acid diglycidyl ester, tetrahydrophthalic acid diglycidyl ester, hexahydrophtalic acid diglycidyl ester, acrylic acid diglycidyl ester and dimer acid diglycidyl ester; a glycidyl amine type epoxy compound such as diglycidyl aniline, tetraglycidyl diaminodiphenylmethane, triglycidyl isocyanurate and triglycidyl aminophenol; a linear aliphatic epoxy compound such as epoxidized polybutadiene and epoxidized soybean oil; and an alicyclic epoxy compound such as 3,4-epoxy-6-methylcyclohexylmethyl-3,4-epoxy-6-methylcyclohexane carboxylate, 3,4-epoxycyclohexylmethyl 3,4-epoxycyclohexanecarboxylate, bis(3,4-epoxy-6-methylcyclohexylmethyl)adipate, vinylcyclohexene diepoxide, dicyclopentadiene oxide, bis (2, 3-epoxycyclopentyl) ether and limonene dioxide.

From the point of view that the pressure resistance of the hollow particles can be easily improved by increasing the crosslinking density of the shell and a deterioration in the pressure resistance at high temperature can be easily suppressed, the polyvalent epoxy compound is preferably a glycidyl ether type epoxy compound, and more preferably a resorcinol diglycidyl ether.

As the polyvalent epoxy compound, a commercially-available product may be used. As such a commercially-available polyvalent epoxy compound product, examples include, but are not limited to, DENACOL EX-810, 810P, 811, 850, 851, 821, 830, 832, 841, 861, 214, 920, 201, 201-IM, 211, 212, 212L, 252, 931 and 991L (product names, manufactured by Nagase ChemteX Corporation).

The compound mixture of the above (i) may further contain a (meth)acryloyl group-containing compound not containing an isocyanate group, an amino group, a hydroxy group or an epoxy group. As such a (meth)acryloyl group-containing compound, examples include, but are not limited to, a monofunctional (meth)acrylate such as methyl (meth)acrylate, ethyl (meth)acrylate, butyl (meth)acrylate, 2-ethylhexyl (meth)acrylate, lauryl (meth)acrylate and t-butylaminoethyl (meth)acrylate; a polyfunctional (meth)acrylate such as ethylene glycol di(meth)acrylate, diethylene glycol di(meth)acrylate, tricyclodecane dimethanol di(meth)acrylate, trimethylolpropane tri(meth)acrylate, ditrimethylolpropane tetra(meth)acrylate, pentaerythritol tetra(meth)acrylate, dipentaerythritol hexa(meth)acrylate, dipentaerythritol poly (meth) acrylate, 1,6-hexanediol di(meth)acrylate, 1,9-nonanediol di(meth)acrylate, 1,10-decanediol di(meth)acrylate, neopentyl glycol di(meth)acrylate, polyethylene glycol di(meth)acrylate, polypropylene glycol di(meth)acrylate and ethoxylated bisphenol A di(meth)acrylate; allyl (meth)acrylate; and vinyl (meth)acrylate.

The urethane bond-containing (meth)acrylate described in the above (ii) is a compound containing a urethane bond and a (meth)acryloyl group per molecule. For example, an oligomer containing a polyurethane structure and at least one (meth)acryloyl group is preferably used.

The urea bond-containing (meth)acrylate described in the above (ii) is a compound containing a urea bond and a (meth)acryloyl group per molecule. For example, an oligomer containing a polyurea structure and at least one (meth) acryloyl group is preferably used.

The urethane bond-containing (meth)acrylate and the urea bond-containing (meth)acrylate are preferred from the point of view that the pressure resistance of the hollow particles can be easily improved by increasing the crosslinking density of the shell-forming resin and a deterioration in the pressure resistance at high temperature can be easily suppressed. The urethane bond-containing (meth)acrylate is preferred, and an oligomer containing a polyurethane structure and at least one (meth)acryloyl group, is more preferred.

Each of the urethane bond-containing (meth)acrylate and the urea bond-containing (meth)acrylate may be a synthetic product obtained by polymerizing a desired monomer, or it may be a commercially-available product.

As such a commercially-available urethane bond-containing (meth)acrylate product, examples include, but are not limited to, the following: EBECRYL 230, EBECRYL 270, EBECRYL 4858, EBECRYL 8402, EBECRYL 8804, EBECRYL 4513, EBECRYL 4738, EBECRYL 4740, EBECRYL 8465, EBECRYL 9260, EBECRYL 4666, EBECRYL 8210, EBECRYL 8606, EBECRYL 1290, EBECRYL 5129, EBECRYL 8301R, KRM8200, EBECRYL 210, EBECRYL 220 (product names, manufactured by Daicel-Allnex Ltd.), MIRAMER PU2100, MIRAMER WS2600 and MIRAMER WS4000 (product names, manufactured by Miwon Specialty Chemical Co., Ltd.)

The (ii) may be a mixture that further contains a (meth)acryloyl group-containing compound not containing an isocyanate group, an amino group, a hydroxy group or an epoxy group. Examples of such a (meth)acryloyl group-containing compound are as described above.

As the isocyanate group-containing compound, amino group-containing compound, hydroxy group-containing compound and epoxy group-containing compound used in the compound mixture of the above-described (iii), for example, the polyisocyanate, polyamine, polyol and polyvalent epoxy compound used in the above-described (i) may be preferably used, respectively. The isocyanate group-containing compound and active hydrogen compound of the above-described (iii) may contain or may be free of a (meth)acryloyl group.

As the (meth)acryloyl group-containing compound used in the above-described (iii), examples include, but are not limited to, those exemplified above as the (meth)acryloyl group-containing compound not containing an isocyanate group, an amino group, a hydroxy group or an epoxy group.

To the extent that does not impair the effects of the present disclosure, the shell material may further contain a radically polymerizable compound which does not contain an isocyanate group, an amino group, a hydroxy group, an epoxy group and a (meth)acryloyl group and which contains a radically polymerizable group other than a (meth)acryloyl group. As the radically polymerizable compound, examples include, but are not limited to, a hydrocarbon monomer such as an aromatic vinyl monomer and a diene monomer; an allyl monomer such as diallyl phthalate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and vinylpyridine. In the present disclosure, a compound consisting of carbon and hydrogen and containing a vinyl group, is referred to as "hydrocarbon monomer".

As the aromatic vinyl monomer, examples include, but are not limited to, an aromatic divinyl monomer such as divinylbenzene, divinylbiphenyl and divinylnaphthalene, and an aromatic monovinyl monomer such as styrene, vinyl toluene, $\alpha$-methylstyrene, p-methylstyrene, ethylvinylbenzene, ethylvinylbiphenyl and ethylvinylnaphthalene.

As the diene monomer, examples include, but are not limited to, a linear or branched diolefin such as butadiene, isoprene, 2,3-dimethylbutadiene, pentadiene and hexadiene, and an alicyclic diolefin such as dicyclopentadiene, cyclopentadiene and ethylidene tetracyclododecene.

As the hydrocarbon monomer, examples include, but are not limited to, a linear or branched monoolefin such as ethylene, propylene and butylene, and an alicyclic monoolefin such as vinylcyclohexane, norbornene and tricyclododecene.

The radically polymerizable compound is preferably a hydrocarbon monomer, more preferably an aromatic vinyl monomer, and still more preferably an aromatic divinyl monomer.

When the shell-forming resin contains the urea bond, the urea bond is preferably a urea bond formed by a reaction of a polyamine with an isocyanate group-containing compound.

When the shell-forming resin contains the urethane bond, the urethane bond is preferably a urethane bond formed by a reaction of at least one selected from the group consisting of a polyester polyol, a polyether polyol, an aliphatic polyol, a (meth)acrylic polymer polyol, a hydroxy group-containing (meth)acrylate and a polyvalent epoxy compound with an isocyanate group-containing compound.

This is because there is a tendency that the pressure resistance of the hollow particles is improved and a deterioration in the pressure resistance at high temperature is suppressed by using, as the active hydrogen compound, at least one selected from the group consisting of a polyamine, a polyester polyol, a polyether polyol, an aliphatic polyol, a (meth)acrylic polymer polyol, a hydroxy group-containing (meth)acrylate and a polyvalent epoxy compound.

The urethane bond is more preferably a urethane bond formed by a reaction of at least one active hydrogen compound selected from the group consisting of an aliphatic polyol, a (meth)acrylic polymer polyol, a hydroxy group-containing (meth)acrylate and a polyvalent epoxy compound with an isocyanate group-containing compound.

From the point of view that the crosslinking density of the shell-forming resin can be particularly increased, the active hydrogen compound is preferably at least one selected from the group consisting of the following: an aliphatic polyol having a solubility in water at 15°C of from 0.1 g/L to 700 g/L and a molecular weight of from 100 to 20000, an aliphatic polyamine having the same solubility and the same molecular weight, a polyester polyol, a polyether polyol, a (meth)acrylic polymer polyol, a hydroxy group-containing (meth)acrylate and a polyvalent epoxy compound. These active hydrogen compounds can increase the crosslinking density of the shell, since they are likely to remain in the shell during the polymerization reaction, and they can sufficiently develop the polymerization reaction in the shell. Especially, a reaction between the particles is suppressed by use of the above active hydrogen compounds. Accordingly, aggregation of the precursor particles is suppressed, thereby decreasing a coarse powder amount; moreover, the D90/D50 ratio of the obtained hollow particles can be decreased.

From the point of view that the pressure resistance of the hollow particles can be easily improved by increasing the crosslinking density of the shell and a deterioration in the pressure resistance at high temperature can be easily suppressed, the constitutional unit derived from the isocyanate group-containing compound contained in the shell, preferably contains a constitutional unit derived from at least one selected from the group consisting of an isocyanate group-containing (meth)acrylate and a polyisocyanate, and the constitutional unit more preferably contains a constitutional unit derived from an isocyanate group-containing polyfunctional (meth)acrylate.

In the shell of the hollow particles of the present disclosure, with respect to the total 100 parts by mass of the constitutional unit derived from the isocyanate group-containing compound and the constitutional unit derived from the active hydrogen compound, the content of the constitutional unit derived from the active hydrogen compound is preferably 10 parts by mass or more, and more preferably 15 parts by mass or more as the lower limit, and it is preferably 70 parts by mass or less, more preferably 60 parts by mass or less, and still more preferably 50 parts by mass or less as the upper limit. When the proportion of the constitutional unit derived from the active hydrogen compound is within the above range, the crosslinking density of the shell is likely to increase; therefore, the pressure resistance of the hollow particles is likely to increase, and the pressure resistance is less likely to deteriorate at high temperature. In addition, when the proportion of the constitutional unit derived from the active hydrogen compound is within the above range, especially, the deformation of the hollow particles is less likely to occur, and the average circularity can be easily controlled to 0.90 or more, accordingly.

The urethane bond-containing (meth)acrylate is generally obtained by a reaction of the isocyanate group-containing compound with the hydroxy group-containing (meth)acrylate. Accordingly, the constitutional unit derived from the urethane bond-containing (meth)acrylate can be considered to comprise the constitutional unit derived from the isocyanate group-containing compound and the constitutional unit derived from the hydroxy group-containing (meth)acrylate. The urea bond-containing (meth)acrylate is generally obtained by a reaction of the isocyanate group-containing compound with the amino group-containing (meth)acrylate. Accordingly, the constitutional unit derived from the urethane bond-containing (meth)acrylate can be considered to comprise the constitutional unit derived from the isocyanate group-containing compound and the constitutional unit derived from the amino group-containing (meth)acrylate.

The content of each constitutional unit contained in the shell-forming resin can be obtained from the shell material used for production.

With respect to 100% by mass of the resin, the content of the constitutional unit derived from the active hydrogen compound, is preferably 10% by mass or more, and more preferably 15% by mass or more as the lower limit, and it is preferably 70% by mass or less, more preferably 60% by mass or less, and still more preferably 50% by mass or less as the upper limit. When the content of the constitutional unit derived from the active hydrogen compound is within the above range, the crosslinking density of the shell is likely to increase; therefore, the pressure resistance of the hollow particles is likely to increase, and the pressure resistance is less likely to deteriorate at high temperature.

As used herein, "100% by mass of resin" is the same as "100% by mass of shell material".

With respect to 100% by mass of the resin, the content of the constitutional unit derived from the (meth)acryloyl group-containing compound is preferably 30% by mass or more, more preferably 40% by mass or more, and still more preferably 50% by mass or more. The upper limit of the content is not particularly limited, and it may be 90% by mass or less, for example. When the content of the constitutional unit derived from the (meth)acryloyl group-containing compound is within the above range, the crosslinking density of the shell is likely to increase; therefore, the pressure resistance of the hollow particles is likely to increase, and the pressure resistance is less likely to deteriorate at high temperature.

The (meth)acryloyl group-containing compound encompasses a compound containing a functional group other than a (meth)acryloyl group, such as an isocyanate group-containing (meth)acrylate, a hydroxy group-containing (meth)acrylate, an amino group-containing (meth)acrylate, an epoxy group-containing (meth)acrylate, a urethane bond-containing (meth)acrylate and a urea bond-containing (meth)acrylate.

From the point of view that the pressure resistance of the hollow particles can be easily improved and a deterioration in the pressure resistance at high temperature can be easily suppressed, the constitutional unit derived from the (meth)acryloyl group-containing compound is preferably a constitutional unit derived from a compound containing two or more (meth)acryloyl groups per molecule.

When the shell of the hollow particles of the present disclosure contains a constitutional unit derived from the radically polymerizable compound, the content of the constitutional unit derived from the radically polymerizable compound is not particularly limited. With respect to 100% by mass of the resin, the content is preferably 20% by mass or less, more preferably 15% by mass or less, and still more preferably 10% by mass or less. Also, with respect to 100% by mass of the resin, the content of the constitutional unit derived from the radically polymerizable compound may be 1% by mass or more, or it may be 5% by mass or more, for example. By containing the constitutional unit derived from the radically polymerizable compound, the crosslinking density of the shell may increase to improve the pressure resistance of the hollow particles. On the other hand, when the content of the constitutional unit derived from the radically polymerizable compound is equal to or less than the upper limit value, a synergy between the structure that is at least one selected from the group consisting of a urethane bond and a urea bond, and the structure formed by polymerization of a (meth)acryloyl group, can be easily obtained.

In the present disclosure, from the viewpoint of improving he pressure resistance of the hollow particles and suppressing a deterioration in the pressure resistance at high temperature, with respect to 100% by mass of the resin, the total content of the constitutional unit derived from the isocyanate group-containing compound, the constitutional unit derived from the active hydrogen compound, and the constitutional unit derived from the radically polymerizable compound is preferably 95% by mass or more, more preferably 97% by mass or more, still more preferably 99% by mass or more, and most preferably 100% by mass.

From the viewpoint of efficient development of the rection between the isocyanate group-containing compound and the active hydrogen compound, with respect to 100% by mass of the resin, the content of a constitutional unit derived from a carboxy group-containing compound such as (meth)acrylic acid, is preferably 5% by mass or less, more preferably 3% by mass or less, and still more preferably 1% by mass or less.

The content of the shell material in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the shell material is preferably from 15% by mass to 50% by mass, and more preferably from 20% by mass to 40% by mass.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the shell material composition containing the hydrophobic solvent are dispersed in the aqueous medium, is obtained. In the suspension step, phase separation occurs in the droplets of the shell material composition. As a result, the hydrophobic solvent with low polarity is likely to collect in the interior of the droplets of the shell material composition. In the end, according to their respective polarities, the hydrophobic solvent is distributed in the interior of the droplets of the shell material composition, and the material not containing the hydrophobic solvent is distributed at the periphery of the droplets of the shell material composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from the group consisting of known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferred.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

As the hydrocarbon solvent, a hydrocarbon solvent containing 4 to 7 carbon atoms is preferred, and a hydrocarbon solvent containing 5 to 7 carbon atoms is more preferred. The hydrocarbon solvent used herein may be an aromatic hydrocarbon or an aliphatic hydrocarbon. The hydrocarbon solvent is preferably an aliphatic hydrocarbon, more preferably a cyclic hydrocarbon solvent, and still more preferably at least one selected from the group consisting of cyclohexane, cycloheptane and methylcyclohexane.

These hydrophobic solvents may be used alone or in combination of two or more.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity of the hydrophobic solvent at 20°C is preferably 2.5 or less. The relative permittivity is one of the indices of the level of the polarity of a compound. In the case where the hydrophobic solvent has a sufficiently small relative permittivity of 2.5 or less, it is considered that phase separation progresses rapidly in the droplets of the shell material composition and the hollow portion can be easily formed.

Examples of hydrophobic solvents having a relative permittivity at 20°C of 2.5 or less, are as follows. The inside of the parentheses is the value of relative permittivity.

Cyclohexane (2.0), toluene (2.4), hexane (1.9).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the shell material and so on include the hydrophobic solvent. Accordingly, as the content of the hydrophobic solvent increases, the void ratio of the obtained hollow particles tends to increase.

In the present disclosure, with respect to 100 parts by mass of the shell material, the content of the hydrophobic solvent in the mixture liquid is preferably 50 parts by mass or more and 500 parts by mass or less, from the following viewpoints: the particle diameter of the hollow particles can be easily controlled; the void ratio can be easily increased while maintaining the strength of the hollow particles; and the amount of the residual hydrophobic solvent in the hollow particles can be easily reduced. The content of the hydrophobic solvent in the mixture liquid is more preferably 70 parts by mass or more and 300 parts by mass or less, and still more preferably 80 parts by mass or more and 200 parts by mass or less, with respect to 100 parts by mass of the shell material.

(C) Polymerization initiator

When the shell material contains the (meth)acryloyl group-containing compound, the mixture liquid preferably contains a polymerization initiator for developing the radical polymerization reaction of the (meth)acryloyl group.

As the polymerization initiator, an oil-soluble polymerization initiator is preferably used. In the case of using the oil-soluble polymerization initiator, in the suspension step described later, the droplets of the shell material composition contain the oil-soluble polymerization initiator, the shell material and the hydrophobic solvent. The droplets of the shell material composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets. In the suspension polymerization method using such an oil-soluble polymerization initiator, there is no opportunity for the polymerization initiator to come into contact with the (meth)acryloyl group-containing compound in the aqueous medium. Therefore, by using the oil-soluble polymerization initiator, the subgeneration of surplus resin particles (e.g., solid particles having a relatively small particle diameter) in addition to the target resin particles having the hollow portion, can be suppressed.

The oil-soluble polymerization initiator is not particularly limited, as long as it is a lipophilic one having a solubility in water at 15°C of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). Of them, an organic peroxide is preferably used as the oil-soluble polymerization initiator, from the point of view that due to an increase in the crosslinking density of the shell, the pressure resistance of the hollow particles can be easily improved, and a deterioration in the pressure resistance at high temperature can be easily suppressed.

With respect to 100 parts by mass of the (meth)acryloyl group-containing compound in the mixture liquid, the content of the polymerization initiator is preferably 0.5 parts by mass or more, more preferably 1 part by mass or more, and still more preferably 2 parts by mass or more as the lower limit. On the other hand, it is preferably 10 parts by mass or less, more preferably 7 parts by mass or less, and still more preferably 6 parts by mass or less as the upper limit.

When the content of the polymerization initiator is equal to or less than the upper limit value, the polymerization initiator is less likely to remain after the end of the polymerization reaction, and an unexpected side reaction is less likely to progress.

(D) Dispersion stabilizer

The dispersion stabilizer is an agent for dispersing the droplets of the shell material composition in the aqueous medium in the suspension step. As the dispersion stabilizer, examples include, but are not limited to, an inorganic dispersion stabilizer, an organic or inorganic water-soluble polymer stabilizer and a surfactant.

In the present disclosure, an inorganic dispersion stabilizer is preferably used as the dispersion stabilizer, from the following viewpoints: the particle diameter of the droplets can be easily controlled in the suspension, and the dispersion stabilizer can be easily removed by the washing step; moreover, an excessive decrease in the shell thickness is suppressed, and a decrease in the strength of the hollow particles is suppressed. When a water-soluble polymer stabilizer or a surfactant is used as the dispersion stabilizer, due to a reaction between a part of the dispersion stabilizer and the isocyanate group-containing compound, the crosslinking density of the shell may decrease. Meanwhile, by using an inorganic dispersion stabilizer as the dispersion stabilizer, a decrease in the crosslinking density of the shell can be suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more.

When the epoxy group-containing compound is used as the active hydrogen compound, from the viewpoint of opening the ring of the epoxy group, the suspension described below is preferably acidic or basic. To make the suspension basic, as the dispersion stabilizer, a basic salt of the above-described metal hydroxide or the like is preferably used.

As the inorganic dispersion stabilizer, a sparingly water-soluble inorganic dispersion stabilizer is preferably used. The term "sparingly water-soluble" is preferably such that the solubility in water at 25°C is less than 1 g/L.

As the sparingly water-soluble inorganic dispersion stabilizer, a metal hydroxide is preferred, and a magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the inorganic dispersion stabilizer can be easily removed by the washing step described below.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from the group consisting of alkali metal hydroxide salts and alkaline earth metal hydroxide salts in the aqueous medium, is not particularly limited. For example, an aqueous solution of the water-soluble polyvalent metal salt may be mixed with an aqueous solution of the at least one selected from the group consisting of alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (such as polyacrylic acid), a cellulose (such as hydroxyethyl cellulose, carboxymethyl cellulose, methyl cellulose and ethyl cellulose), polyvinylpyrrolidone, polyacrylimide, polyethylene oxide and a poly(hydroxystearic acid-g-methyl methacrylate-co-methacrylic acid) copolymer.

As the inorganic water-soluble polymer stabilizer, examples include, but are not limited to, sodium tripolyphosphate.

The surfactant is a compound containing both a hydrophilic group and a hydrophobic group per molecule. As the surfactant, examples include, but are not limited to, a conventionally-known ionic surfactant such as an anionic surfactant, a cationic surfactant and an amphoteric surfactant, and a conventionally-known non-ionic surfactant.

For the water-soluble polymer stabilizer and the surfactant, the solubility in water at 25°C is 1 g/L or more.

The content of the dispersion stabilizer is not particularly limited. With respect to the total mass (100 parts by mass) of the shell material and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the shell material composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the shell material composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the shell material contained in the mixture liquid, the content of the aqueous medium is, as the lower limit thereof, preferably 200 parts by mass or more, more preferably 400 parts by mass or more, and still more preferably 600 parts by mass or more. The content is, as the upper limit thereof, preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the shell material, (B) hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the shell material, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles in which the composition of the shell portion is uniform, can be produced. Also, the particle diameter of the hollow particles can be easily controlled.

(2) Suspension step

The suspension step includes suspending the above-described mixture liquid to prepare the suspension in which droplets of the shell material composition containing the hydrophobic solvent are dispersed in the aqueous medium.

The suspension method for forming the droplets of the shell material composition is not particularly limited, and a known suspension method can be employed. A disperser is used to prepare the suspension. As the disperser, for example, a horizontal or vertical in-line disperser such as MILDER (manufactured by Pacific Machinery & Engineering Co., Ltd.), CAVITRON (manufactured by EUROTEC, Ltd.) and an in-line disperser manufactured by IKA (e.g., DISPAX-REACTOR (registered trademark) DRS) or an emulsifying disperser such as HOMOMIXER MARK II series (manufactured by PRIMIX Corporation) can be used.

In the suspension prepared in the suspension step, the droplets of the shell material composition containing the lipophilic materials mentioned above and having a particle diameter of approximately from 1 $\mu$m to 50 $\mu$m, are dispersed uniformly in the aqueous medium. Such droplets of the shell material composition are difficult to observe with the naked eye and can be observed with a known observation instrument such as an optical microscope.

In the suspension step, since phase separation occurs in the droplets of the shell material composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the shell material composition dispersed in the aqueous medium are formed by the oil-soluble shell material composition and the dispersion stabilizer surrounding the periphery of the oil-soluble shell material composition. The droplets of the shell material composition contain the oil-soluble polymerization initiator, the shell material and the hydrophobic solvent.

(3) Polymerization step

The polymerization step includes polymerizing the shell material contained in the suspension obtained by the suspension step to form precursor particles comprising a shell, which contains a resin, and a hollow portion, which is surrounded by the shell and filled with the hydrophobic solvent. By this step, a precursor composition in which the precursor particles are dispersed in the aqueous medium, is obtained.

The polymerization system is not particularly limited. For example, a known polymerization system such as a batch system, a semicontinuous system and a continuous system may be employed.

The polymerization temperature is not particularly limited, and it is appropriately adjusted so that the reaction between the compounds contained in the shell material proceeds. In the case of developing at least one of or both the reaction between the isocyanate group-containing compound and the active hydrogen compound and the polymerization reaction of the (meth)acryloyl group, the polymerization temperature is preferably from 40°C to 95°C, and more preferably from 50°C to 90°C.

The polymerization reaction time is preferably from 1 hour to 48 hours. From the viewpoint of reducing the amount of the shell material remaining unreacted, the polymerization reaction time is preferably 5 hours or more. The polymerization reaction time is preferably 36 hours or less as the upper limit, from the viewpoint of ease of production.

(4) Solvent removal step

The solvent removal step includes removing the included hydrophobic solvent from the precursor particles. In the present disclosure, a method of removing the included hydrophobic solvent from the precursor particles in a gaseous atmosphere after solid-liquid separation of the slurry in which the precursor particles are dispersed in the aqueous medium, or a method of removing the included hydrophobic solvent from the precursor particles in the slurry may be employed.

The method of the solid-liquid separation is not particularly limited. As the method, examples include, but are not limited to, a centrifugation method, a filtration method, and still-standing separation. Among them, a filtration method is preferred from the viewpoint of simplicity of the operation and high dispersion stabilizer removal efficiency.

The precursor particles subjected to the solid-liquid separation may be preliminary dried before the removal of the hydrophobic solvent. The preliminary drying may be performed by drying a component in a solid form containing the precursor particles obtained by the solid-liquid separation, by use of a drying apparatus such as a dryer and a drying appliance such as a hand dryer.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and a combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As the method of removing the included hydrophobic solvent from the precursor particles in the slurry in which the precursor particles are dispersed in the aqueous medium, examples include, but are not limited to, evaporating the hydrophobic solvent included in the precursor particles at a predetermined pressure in the slurry. More specifically, examples include, but are not limited to, evaporating the hydrophobic solvent included in the hollow particles by introducing water vapor, air or inert gas such as nitrogen, argon and helium to the slurry at a predetermined pressure selected from the group consisting of high, normal and reduced pressures. From the viewpoint of excellent hydrophobic solvent removal efficiency, evaporating the hydrophobic solvent included in the hollow particles by introducing, at a predetermined pressure, inert gas to the slurry in which the precursor particles are dispersed, is particularly preferred.

As the method of introducing the inert gas into the slurry, for example, a method of bubbling the inert gas into the slurry is preferably used.

The temperature at the time of introducing the inert gas into the slurry is preferably a temperature equal to or more than the temperature obtained by subtracting 35°C from the boiling point of the hydrophobic solvent, more preferably a temperature equal to or more than the temperature obtained by subtracting 30°C from the boiling point of the hydrophobic solvent, and still more preferably a temperature equal to or more than the temperature obtained by subtracting 20°C from the boiling point of the hydrophobic solvent, from the viewpoint of reducing the amount of the residual hydrophobic solvent. When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points. The temperature at the time of introducing the inert gas into the slurry is generally set to a temperature equal to or more than the polymerization temperature of the polymerization step. The temperature at the time of introducing the inert gas into the slurry is not particularly limited, and it may be from 50°C to 100°C.

Depending on the type and amount of the hydrophobic solvent, the condition of bubbling the inert gas into the slurry is appropriately controlled so that the included hydrophobic solvent can be removed from the precursor particles. The bubbling condition is not particularly limited. For example, the inert gas may be bubbled in an amount of 1 L/min to 3 L/min for 1 hour to 72 hours.

By the method of introducing the inert gas into the slurry, a slurry of the hollow particles including the inert gas is obtained. The slurry is subjected to solid-liquid separation to obtain hollow particles, and the obtained hollow particles are dried for removal of residual water, thereby obtaining the hollow particles in which the hollow portion is occupied by gas.

(5) Washing step

The method for producing the hollow particles of the present disclosure preferably includes the washing step before the solvent removal step described above.

The washing step may include removing the dispersion stabilizer from the precursor particles obtained by the polymerization step described above.

For example, the washing step is carried out by adding acid or alkali to the precursor composition obtained by the polymerization step to dissolve the dispersion stabilizer contained in the precursor particles into the aqueous medium, and then separating the precursor particles from the aqueous medium. When the dispersion stabilizer used is an acid-soluble inorganic dispersion stabilizer, acid is preferably added. When the dispersion stabilizer used is an alkali-soluble inorganic dispersion stabilizer, alkali is preferably added.

When the dispersion stabilizer used is the acid-soluble inorganic dispersion stabilizer, the pH of the precursor composition is preferably adjusted to 6.5 or less, and more preferably 6 or less, by adding acid to the precursor composition. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small burden on production equipment.

In the washing step, an operation to wash the precursor particles separated after the acid or alkali addition with deionized water and then dehydrate the precursor particles, is preferably repeated several times. Also in the washing step, to suppress aggregation of the precursor particles, a small amount of nonionic surfactant may be added to the slurry.

The method for separating the precursor particles from the aqueous medium is not particularly limited. As the method, examples include, but are not limited to, the same methods exemplified above as the solid-liquid separation method. Among them, a filtration method is preferred from the viewpoint of simplicity of the operation and high dispersion stabilizer removal efficiency. Upon the separation of the precursor particles from the aqueous medium, the precursor particles obtained by the filtration method or the like are preferably dehydrated by a known method.

(6) Others

In addition to the steps (1) to (5) mentioned above, a step such as a particle interior substitution step may be added, for example. The particle interior substitution step includes substituting the gas or liquid in the interior of the hollow particles with another gas or liquid. By such substitution, the environment of the interior of the hollow particles can be changed; molecules can be selectively enclosed in the interior of the hollow particles; or the chemical structure of the interior of the hollow particles can be modified in accordance with the intended application.

2. Hollow particles

The hollow particles of the present disclosure are particles comprising a resin-containing shell (outer shell) and a hollow portion surrounded by the shell.

In the present disclosure, the hollow portion is a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of pressure resistance and so on, the hollow particles of the present disclosure preferably have a solid shell.

The hollow portion of the hollow particles can be determined by, for example, SEM observation of a cross section of the particles or TEM observation of the particles as they are.

From the viewpoint of weight reduction, heat insulation and so on, the hollow portion of the hollow particles of the present disclosure is preferably filled with gas such as air.

The shell of the hollow particles of the present disclosure is only required to be a shell which contains a resin containing at least one selected from the group consisting of a urethane bond and a urea bond, and a structure formed by polymerization of a (meth)acryloyl group. From the point of view that the pressure resistance of the hollow particles can be easily improved and a deterioration in the pressure resistance at high temperature can be easily suppressed, the shell of the hollow particles of the present disclosure preferably has a single-layer structure.

For example, the resin contained in the shell may be a urethane urea-acrylic hybrid polymer, or it may be a polymer mixture containing a (meth)acrylic polymer and at least one selected from the group consisting of a polyurethane and a polyurea. The urethane urea-acrylic hybrid polymer means a polymer which contains at least one selected from the group consisting of a urethane bond and a urea bond, and a structure formed by polymerization of a (meth)acryloyl group. A polymer containing a urethane bond and a structure formed by polymerization of a (meth)acryloyl group and not containing a urea bond, may be referred to as urethane-acrylic hybrid polymer. A polymer containing a urea bond and a structure formed by polymerization of a (meth)acryloyl group and not containing a urethane bond, may be referred to as urea-acrylic hybrid polymer.

From the point of view that the pressure resistance of the hollow particles can be easily improved and a deterioration in the pressure resistance at high temperature can be easily suppressed, the hollow particles of the present disclosure preferably contain the urethane urea-acrylic hybrid polymer. As the urethane urea-acrylic hybrid polymer, examples include, but are not limited to, a polymer obtained by polymerizing the compound mixture of the above (i) and a polymer obtained by polymerizing the compound of the above (ii). From the point of view that the pressure resistance of the hollow particles can be easily improved and a deterioration in the pressure resistance at high temperature can be easily suppressed, a urethane urea-acrylic hybrid polymer obtained by polymerizing the compound mixture of the above (i), is preferred.

The urethane urea-acrylic hybrid polymer may be a polymer containing, for example, a main chain formed by polymerization of the (meth)acryloyl group and a crosslinking structure formed by at least one selected from the group consisting of a urethane bond and a urea bond, or it may be a polymer in which a crosslinking structure formed by polymerization of the (meth)acryloyl group, is contained in a polyurethane or polyurea produced by reaction of a polyisocyanate with a polyamine or polyol.

In the hollow particles of the present disclosure, the resin contained in the shell is a reaction product of the shell material described above. In the shell of the hollow particles of the present disclosure, from the viewpoint of suppressing a deterioration in the pressure resistance, in 100% by mass of the shell, the content of the resin is preferably 96% by mass or more, more preferably 97% by mass or more, and still more preferably 98% by mass or more.

The shell of the hollow particles of the present disclosure may be a shell consisting of the above-described resin. To the extent that does not impair the effects of the present disclosure, the shell may further contain an additive which is different from the resin.

In the infrared absorption spectrum obtained by measuring the hollow particles of the present disclosure by ATR-FTIR, which is a Fourier transform infrared spectroscopy (FTIR) using the attenuated total reflection method, the absorbance ratio (A1/A2) of the absorbance A1, which is the absorbance at the maximum peak in a range of from 1500 cm$^{-1}$ to 1550 cm$^{-1}$, to the absorbance A2, which is the absorbance at the maximum peak in a range of from 1700 cm$^{-1}$ to 1750 cm$^{-1}$, is preferably 0.1 or more and 0.5 or less. As a result, a good balance is obtained between the content of the structure that is at least one selected from the group consisting of a urethane bond and a urea bond and the content of the structure formed by polymerization of a (meth)acryloyl group, and the pressure resistance of the hollow particles can be easily improved, and a deterioration in the pressure resistance at high temperature can be easily suppressed, accordingly.

The absorbance A1 is an absorbance corresponding to an absorption spectrum derived from the bending vibration of a NH group contained in the urethane bond, allophanate bond, oxazolidone ring or urea bond. It is obtained as the peak top intensity of the maximum peak that appears in a range of from 1500 cm$^{-1}$ to 1550 cm$^{-1}$.

The absorbance A2 is an absorbance corresponding to an absorption spectrum derived from the stretching vibration of a carbonyl group contained in the structure formed by polymerization of a (meth)acryloyl group. It is obtained as the peak top intensity of the maximum peak that appears in a range of from 1700 cm$^{-1}$ to 1750 cm$^{-1}$.

While the urethane bond formed by the reaction between the isocyanate group and the hydroxy group may react with a hydroxy group to form an allophanate bond, at least a part of the urethane bonds is left by, for example, adjusting the content of the active hydrogen compound within the above-described preferred range, or by employing the above-described preferred polymerization reaction condition. When the isocyanate group-containing compound is reacted with the epoxy group-containing compound, the isocyanate group and the epoxy group may form a urethane bond or an oxazolidone ring. In the hollow particles production method of the present disclosure, the compounds are reacted at a temperature at which an oxazolidone ring is less likely to be formed; therefore, in general, a urethane bond is more likely to be formed. Accordingly, even when the shell of the hollow particles of the present disclosure contains the allophanate bond or oxazolidone ring, as long as the absorbance ratio (A1/A2) is within the above range, a good balance is obtained between the content of the structure that is at least one selected from the group consisting of a urethane bond and a urea bond and the content of the structure formed by polymerization of a (meth)acryloyl group. The absorbance ratio (A1/A2) is more preferably 0.15 or more, and still more preferably 0.20 or more as the lower limit. On the other hand, it is more preferably 0.45 or less, and still more preferably 0.40 or less as the upper limit.

On the surface of the hollow particles of the present disclosure, an unreacted amino group or hydroxy group may be present. As a result, in the mixture of the hollow particles and matrix resin of the present disclosure, the adhesion therebetween may be increased.

The hollow particles of the present disclosure have an average circularity of 0.90 or more. From the viewpoint of improving the pressure resistance of the hollow particles and suppressing a deterioration in the pressure resistance at high temperature, the average circularity of the hollow particles of the present disclosure is preferably 0.93 or more, and more preferably 0.95 or more. From the viewpoint of improving the dispersibility of the hollow particles, the average circularity is preferably 0.98 or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 μm/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 particles to 3000 particles.

The hollow particles of the present disclosure may contain, as impurities, small amounts of hollow particles having a low circularity, such as cracked or deformed particles, or small amounts of particles not having a hollow portion. In 100% by mass of the hollow particles of the present disclosure, the percentage of the particles having a circularity of 0.85 or less is preferably 5% by mass or less, more preferably 4% by mass or less, and still more preferably 3% by mass or less.

The particles having a circularity of 0.85 or less are typically cracked particles or deformed particles such as dented particles. Such particles having a low circularity have a low void ratio compared to spherical hollow particles; therefore, the effects exerted by such particles, such as a weight reduction effect and a heat insulation effect, are poor. In the process of producing the hollow particles of the present disclosure, by sufficiently developing the polymerization reaction in the shell, hollow particles containing a small percentage of particles having a low circularity can be obtained.

Also, the particles with a low circularity have the following problem: compared to spherical particles, the particles are poor in dispersibility since they are likely to aggregate when dispersed in the matrix resin. In addition, the particles with a low circularity have the following problem: they are poor in pressure resistance compared to spherical particles, since external pressure is likely to be locally applied thereto. When the particles with a low circularity are dispersed in the matrix resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the particles with a low circularity included in the hollow particles.

When the particle diameter at 50% cumulative volume of the hollow particles of the present disclosure is expressed as D50 and the particle diameter at 90% cumulative volume of the hollow particles is expressed as D90, the ratio of D90 to D50 (D90/D50) is 1.70 or less. The ratio (D90/D50) can be used as the index of the coarse powder amount. As the

**EP 4 596 590 A1**

ratio (D90/D50) increases, the coarse powder amount increases. When the ratio (D90/D50) is 1.70 or less, the coarse powder amount is sufficiently small, and the hollow particles are likely to be uniformly exposed to external force; therefore, the hollow particles are excellent in pressure resistance. Also, when the coarse powder amount is sufficiently small, the polymerization reaction of the shell material is sufficiently developed in the shell, and the crosslinking density of the shell is high; therefore, the hollow particles are excellent in pressure resistance. When the ratio (D90/D50) is equal to or less than the upper limit value, hollow particles with small variations in performance can be obtained, and a product having uniform thickness can be produced in the case of producing, for example, a sheet-shaped resin structure comprising the hollow particles. The ratio (D90/D50) is preferably 1.50 or less, and more preferably 1.40 or less. The lower limit of the ratio (D90/D50) is not particularly limited. From the viewpoint of ease of production, the lower limit may be 1.20 or more, or it may be 1.30 or more, for example.

The D50 and D90 of the hollow particles can be obtained by, for example, measuring the particle diameter of the hollow particles with a particle size distribution measuring device by the Coulter counter method and from a volume-based particle size distribution thereof. The Coulter counter method is a method for measuring the diameter of particles by the electric resistance method called the Coulter Principle.

In the present disclosure, the D50 of the hollow particles is preferably 1.0 $\mu$m or more, more preferably 3.0 $\mu$m or more, and still more preferably 5.0 $\mu$m or more as the lower limit. On the other hand, it is preferably 50.0 $\mu$m or less, more preferably 30.0 $\mu$m or less, and still more preferably 20.0 $\mu$m or less as the upper limit.

When the D50 of the hollow particles is equal to or more than the lower limit value, the dispersibility of the hollow particles improves. When the D50 of the hollow particles is within the above range, a uniform shell can be easily formed, and the pressure resistance of the hollow particles tends to improve since shell thickness non-uniformity is suppressed.

A micro compression breaking strength can be used as the index of the pressure resistance of a micro material. In the present disclosure, the micro compression breaking strength of the hollow particles is the breaking strength of the hollow particles when compressed by a micro compression testing machine at a maximum compression breaking test force of 2000 mN and a loading rate of 0.0466 mN/s. The micro compression breaking strength of the hollow particles is measured with reference to JIS R1639-5. The breaking strength is the strength at the point in time when the particles break, that is, at the point in time when there is a large change in compression displacement, and it is represented by the following formula (A):

$$Cs = 2.48 \ P/\pi d^2 \quad \text{Formula (A)}$$

Cs: Breaking strength (MPa)
P: Test force (N) at the breaking point
d: Particle diameter (mm)

The micro compression breaking strength of the hollow particles at 150°C can be used as the index of the pressure resistance of the hollow particles at high temperature. The micro compression breaking strength of the hollow particles of the present disclosure at 150°C is 5.0 MPa or more. Accordingly, even at high temperature, the hollow particles of the present disclosure have excellent elasticity and strength and exert excellent pressure resistance. The micro compression breaking strength of the hollow particles of the present disclosure at 150°C is preferably 7.5 MPa or more, more preferably 10.0 MPa or more, and still more preferably 15.0 MPa or more. The hollow particles of the present disclosure which have a micro compression breaking strength of 15.0 MPa or more at 150°C, are particularly excellent in pressure resistance at high temperature. Accordingly, when they are added to a resin which is used for injection molding at 150°C to 300°C, the void retention rate of the hollow particles after the injection molding is remarkably high.

For the hollow particles having a micro compression breaking strength of 15.0 MPa or more at 150°C, for example, it is effective to use any one of the following mixtures as the shell material: a mixture of an isocyanate group-containing polyfunctional (meth)acrylate and at least one active hydrogen compound selected from the group consisting of a polyamine, an aliphatic polyol, and a (meth)acrylic polymer polyol, and a mixture of a polyisocyanate and a hydroxy group-containing (meth)acrylate. It is also effective to control the content of the active hydrogen compound in the shell material so that the content of the constitutional unit derived from the active hydrogen compound contained in the shell, is within the above-described, preferred range. It is presumed that since the crosslinking density of the shell can be easily increased by using such a shell material, the micro compression breaking strength at 150°C is increased.

The upper limit of the micro compression breaking strength of the hollow particles of the present disclosure at 150°C, is not particularly limited. For example, it may be 30.0 MPa or less, or it may be 25.0 MPa or less.

The micro compression breaking strength of the hollow particles of the present disclosure at 23°C, is not particularly limited. It is preferably 10.0 MPa or more, more preferably 12.5 MPa or more, and still more preferably 15.0 MPa or more. The upper limit of the micro compression breaking strength of the hollow particles of the present disclosure at 23°C, is not particularly limited. For example, it may be 50.0 MPa or less, may be 40.0 MPa or less, or may be 30.0 MPa or

21

less.

For the hollow particles of the present disclosure, the ratio of the micro compression breaking strength at 150°C to the micro compression breaking strength at 23°C (the micro compression breaking strength at 150°C/the micro compression breaking strength at 23°C) is preferably 0.60 or more, more preferably 0.70 or more, and still more preferably 0.80 or more. As the ratio comes close to 1, a deterioration in the pressure resistance of the hollow particles at high temperature is increasingly suppressed.

The void ratio of the hollow particles of the present disclosure is preferably 60% or more. As the void ratio of the hollow particles increases, the lightness in weight, heat insulation property and so on improve. The upper limit of the void ratio is not particularly limited. From the viewpoint of suppressing a deterioration in the pressure resistance of the hollow particles, it is preferably 85% or less, more preferably 80% or less, and still more preferably 75% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

Apparent density $D_1$ = [Mass of the hollow particles]/ (100 - [Mass of the isopropanol] / [Specific gravity of the isopropanol at the measuring temperature])               Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles]/(100 - [Mass of the isopropanol]/[Specific gravity of the isopropanol at the measuring temperature])               Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100 - (Apparent density $D_1$/True density $D_0$) $\times$ 100               Formula (III)

The hollow particles of the present disclosure may have one or two or more hollow portions. From the viewpoint of maintaining good balance between the high void ratio and the mechanical strength, the hollow particles preferably have only one hollow portion.

When the hollow particles of the present disclosure are particles having only one hollow portion, the hollow particles of the present disclosure may contain, as impurities, a small amount of hollow particles having two or more hollow portions or a small amount of particles not having a hollow portion. In the hollow particles of the present disclosure, the percentage of the number of the particles having only one hollow portion is preferably 90% or more, and more preferably 95% or more.

The shell of the hollow particles of the present disclosure and, when the hollow particles have two or more hollow portions, a partition separating the adjacent hollow portions from each other may be porous. From the viewpoint of improving the pressure resistance and so on, the shell and the partition are preferably solid.

An example of the image of the shape of the hollow particles of the present disclosure, is a bag made of a thin film and inflated with gas. A cross-section of the bag is like the hollow particle 10 shown in the diagram (4) of FIG. 1. In this example, one thin film is provided on the outside, and the interior is filled with gas.

The shape of the particles can be determined by SEM or TEM, for example.

In the present disclosure, the thermal decomposition temperature of the hollow particles is preferably 300°C or more, and more preferably 350°C or more. When the thermal decomposition temperature is equal to or more than the lower limit value, the hollow particles are excellent in heat resistance. The upper limit of the thermal decomposition temperature of the hollow particles is not particularly limited. For example, it may be 400°C or less.

In the present disclosure, the thermal decomposition temperature is a 5% weight reduction temperature when heated in the conditions of an air flow rate of 230 mL/min and a temperature increase rate of 10°C/min, in a nitrogen atmosphere. The thermal decomposition temperature can be measured by a TG-DTA device.

The amount of gas emission from the hollow particles of the present disclosure at 150°C for one hour, is preferably 500 ppm or less, more preferably 200 ppm or less, still more preferably 100 ppm or less, and even more preferably 50 ppm or less.

The gas emission amount is the ratio of the mass of the gas emission from the hollow particles when left at 150°C for one hour, to the mass of the hollow particles before left at 150°C. In general, the mass of the hollow particles before left in an environment at 150°C, is the mass of the hollow particles at room temperature.

When the gas emission amount is equal to or less than the upper limit value, a decrease in the stiffness of the shell at high temperature is suppressed, and a deterioration in the pressure resistance of the hollow particles at high temperature is suppressed. It is thought that as the gas emission amount at high temperature decreases, the amount of by-products contained in the hollow particles decreases. Also, it is thought that as the amount of the by-products decreases, the crosslinking density of the shell increases.

As the applications of the hollow particles of the present disclosure, examples include, but are not limited to, additives for the following: materials such as a weight reducing material, a heat insulation material, a sound insulation material and a refractive index controlling material, which are applied to various kinds of components used in various kinds of fields such as the automotive field, the electronics field, the electric field, the architecture field, the aviation field and the space field; food containers; footwears such as sports shoes and sandals; components of household appliances; components of bicycles; stationery supplies; tools; filaments of 3D printers; and floating buoyant materials such as syntactic foam.

Also, the hollow particles of the present disclosure have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

3. Resin composition

The resin composition of the present disclosure contains at least the hollow particles of the present disclosure described above and a matrix resin. The resin composition is typically in the form of liquid. The resin composition of the present disclosure is generally used as a forming material for the resin structure described below.

The resin composition of the present disclosure contains the above-described hollow particles of the present disclosure, and the hollow particles exert excellent pressure resistance even at high temperature and can retain voids even at high temperature. Accordingly, a resin structure which has a high void ratio and thus has excellent effects such as a weight reduction effect and a heat insulation effect, can be obtained by use of the resin composition of the present disclosure.

As the resin composition in the form of liquid, examples include, but are not limited to, a liquid resin composition containing a liquid matrix resin before being subjected to curing reaction, and a liquid resin composition obtained by dissolving or dispersing components in a solvent. The liquid matrix resin before being subjected to curing reaction and the matrix resin dissolved or dispersed in a solvent, may be a thermosetting resin or a thermoplastic resin. Also, the liquid resin composition may be a resin composition liquefied by melting the matrix resin thereinto.

[Matrix resin]

As the matrix resin, examples include, but are not limited to, a curable resin such as a thermosetting resin, a photocurable resin and a room temperature curable resin, and a thermoplastic resin. Of them, a thermosetting resin, a room temperature curable resin or a thermoplastic resin is preferably used.

The matrix resin contained in the resin composition may be an unreacted monomer, prepolymer or macromonomer; it may be a polymer; or it may be a precursor of a cured resin, such as a polyamic acid. The matrix resin contained in the resin composition of the present disclosure functions as a binder when cured by, for example, heating or light irradiation, or when cured by use of a curing agent, a polymerization initiator, a catalyst or the like.

As the thermosetting resin, a known thermosetting resin may be used, and it is not particularly limited. As the thermosetting resin, examples include, but are not limited to, a phenolic resin, a melamine resin, a urea resin, an unsaturated polyester resin, an epoxy resin, a modified epoxy resin, a polyurethane resin, a silicon resin, an alkyd resin, a benzoxazine resin, an allyl resin, an aniline resin, a modified polyphenylene ether resin, a thermosetting polyimide resin, a maleimide resin, a bismaleimide triazine resin, a liquid crystalline polyester resin, a vinyl ester resin, a cyanate ester resin, and precursors of these resins before curing.

As the room temperature curable resin, examples include, but are not limited to, an adhesive that is curable at room temperature by addition of a catalyst, such as an epoxy adhesive, a silicone adhesive and an acrylic adhesive.

As the thermoplastic resin, examples also include, but are not limited to, a polyolefin resin (such as polypropylene and polyethylene), a polyamide resin (such as PA6, PA66 and PA12), a polycarbonate resin, a polyphenylene sulfide resin, a polyether ether ketone resin, a polystyrene resin, a polyphenylene oxide resin, a liquid crystal polymer (LCP), a polyether ether ketone resin, a polyimide resin, a polyamideimide resin, a polyetherimide resin, a polyvinyl chloride resin, a poly(meth)acrylate resin, a polyvinylidene fluoride resin, an acrylonitrile-butadiene-styrene copolymer (ABS) resin, an acrylonitrile-styrene copolymer (AS) resin, a polyphenylene ether resin, a polyester resin, a polytetrafluoroethylene resin and a thermoplastic elastomer. In general, a thermoplastic elastomer has properties such that it shows rubber elasticity at ordinary temperature (25°C) and it can be plasticized and molded at high temperature. As the thermoplastic elastomer, examples include, but are not limited to, a urethane-based elastomer, a styrene-based elastomer, an olefin-based elastomer, an amide-based elastomer and an esterbased elastomer.

These matrix resins may be used alone or in combination of two or more.

The resin composition of the present disclosure which contains the epoxy resin as the matrix resin is preferred because, in the resin structure obtained by curing the resin composition, the adhesion between the matrix resin and the hollow particles of the present disclosure is excellent. On the surface of the hollow particles of the present disclosure, an unreacted amino group or hydroxy group is generally present. Accordingly, when the epoxy resin is contained as the matrix resin, it is presumed that the epoxy group in the matrix resin reacts with the amino or hydroxy group present on the surface of the hollow particles to form a bond, thereby improving the adhesion.

As the epoxy resin used as the matrix resin, examples include, but are not limited to, a bixylenol type epoxy resin, a bisphenol A type epoxy resin, a bisphenol F type epoxy resin, a bisphenol S type epoxy resin, a bisphenol AF type epoxy resin, a dicyclopentadiene type epoxy resin, a trisphenol type epoxy resin, a naphthol novolac type epoxy resin, a phenol novolac type epoxy resin, a tert-butyl-catechol type epoxy resin, a naphthalene type epoxy resin, a naphthol type epoxy resin, an anthracene type epoxy resin, a glycidyl amine type epoxy resin, a glycidyl ester type epoxy resin, a cresol novolac type epoxy resin, a phenol aralkyl type epoxy resin, a biphenyl type epoxy resin, a linear aliphatic epoxy resin, an epoxy resin having a butadiene structure, an alicyclic epoxy resin, a heterocyclic epoxy resin, a spiro ring-containing epoxy resin, a cyclohexane type epoxy resin, a cyclohexanedimethanol type epoxy resin, a naphthylene ether type epoxy resin, a trimethylol type epoxy resin, a tetraphenylethane type epoxy resin, an isocyanurate type epoxy resin, a phenolphthalimidine type epoxy resin, and a phenolphthalein type epoxy resin. These epoxy resins may be used alone or in combination of two or more.

In the resin composition of the present disclosure, the content of the matrix resin is not particularly limited. In 100% by mass of the total solid content of the resin composition, it is generally from 40% by mass to 95% by mass, preferably from 50% by mass to 95% by mass, and more preferably from 70% by mass to 95% by mass, and it may be from 85% by mass to 95% by mass. When the content of the matrix resin is equal to or more than the lower limit value, the formability of the resin composition can improve, and the mechanical strength of the resin composition when formed into the resin structure can improve. On the other hand, when the content of the matrix resin is equal to or less than the upper limit value, the hollow particles can be sufficiently contained; therefore, excellent effects are exerted by the hollow particles, such as the effect of reducing the weight of the resin composition and the effect of heat insulation.

In the present disclosure, the solid content includes all components excluding a solvent, and a liquid monomer and the like are included in the solid content.

[Hollow particles]

The hollow particles contained in the resin composition of the present disclosure are the above-described hollow particles of the present disclosure.

In the resin composition of the present disclosure, the content of the hollow particles is not particularly limited. In 100% by mass of the total solid content of the resin composition, the content of the hollow particles is preferably 5% by mass or more, and more preferably 10% by mass or more as the lower limit. On the other hand, it is preferably 70% by mass or less, more preferably 50% by mass or less, and still more preferably 30% by mass or less as the upper limit. When the content of the hollow particles is equal to or more than the lower limit value, excellent effects are exerted by the hollow particles, such as the effect of reducing the weight of the resin composition and the effect of heat insulation. When the content of the hollow particles is equal to or less than the upper limit value, the matrix resin can be sufficiently contained in the resin composition; therefore, a deterioration in the properties of the resin composition when molded into a resin structure can be suppressed, and the mechanical properties can be improved.

[Solvent]

The resin composition of the present disclosure may further contain a solvent for dissolving or dispersing the components. A known solvent can be used as the solvent, and it is appropriately selected depending on the type of the matrix resin.

[Other additives]

As needed, the resin composition of the present disclosure may further contain additives to the extent that does not impair the effects of the present disclosure, such as a curing agent, a curing accelerator, a polymerization initiator, a UV absorber, a colorant, a thermal stabilizer and a filler.

4. Resin structure

The resin structure of the present disclosure contains the hollow particles and matrix resin of the present disclosure described above. The resin structure of the present disclosure has properties such as lightweight and heat insulation, since it contains the hollow particles.

The resin structure of the present disclosure may be a structure obtained by solidifying the above-described resin composition of the present disclosure into a desired form, or it may be a structure obtained by melt-kneading the hollow particles of the present disclosure and a thermoplastic resin and molding the resulting mixture.

In the resin structure, the matrix resin is a solidified product. The solidified product of the matrix resin is a resin solidified through or not through a chemical reaction, such as a resin cured by a curing reaction, a resin solidified by drying, and a resin solidified by cooling a thermoplastic resin. The resin structure obtained by use of the resin composition described above may contain, as the matrix resin, a cured resin product which is cured by use of a curing agent, a polymerization initiator, a catalyst or the like, as needed. In this case, the matrix resin may contain a curing agent or the like. The resin structure obtained by melt-kneading the hollow particles of the present disclosure and the thermoplastic resin and molding the resulting mixture, contains a solidified product as the matrix resin, which is the thermoplastic resin solidified by cooling.

The resin structure obtained by use of the above-described resin composition of the present disclosure can be obtained by, for example, curing the above-described curable resin. That is, it can be obtained by a method comprising preparing a resin composition containing the hollow particles of the present disclosure, a matrix resin and a curing agent, and curing the resin composition.

The method for curing the curable resin is not particularly limited. As the method, examples include, but are not limited to, heating and light irradiation such as ultraviolet and electron beam. In the case of a curable resin that is curable at room temperature by addition of a catalyst or the like, the curable resin may be cured by adding a catalyst or the like to the resin and mixing them at room temperature.

The curing agent (crosslinking agent) or catalyst for curing the matrix resin can be appropriately selected from the group consisting of known agents and catalysts, depending on the type of the matrix resin, and it is not particularly limited.

As the curing agent for curing the epoxy-based resin, examples include, but are not limited to, an amine, an acid anhydride, an imidazole, a thiol, a phenol, a naphthol, a benzoxazine, a cyanate ester and a carbodiimide. Of them, at least one selected from the group consisting of an amine, an acid anhydride and an imidazole is preferred, from the point of view that the adhesion between the epoxy resin as the matrix resin and the hollow particles of the present disclosure can be easily increased.

As the amine, examples include, but are not limited to, tris(dimethylaminomethyl)phenol, diazabicycloundecene, diazabicyclononene, piperidine, N,N-dimethylpiperazine, triethylenediamine and benzylmethylamine.

As the acid anhydride, examples include, but are not limited to, phthalic anhydride, trimellitic anhydride, maleic anhydride, ethyleneglycol bistrimellitic acid anhydride, tetrahydrophthalic anhydride, methyltetrahydrophthalic anhydride, methylbutenyl tetrahydrophthalic anhydride, dodecenyl succinic anhydride, hexahydrophthalic anhydride, methylhexahydrophthalic anhydride, succinic anhydride and methylcyclohexene dicarboxylic acid anhydride.

As the imidazole, examples include, but are not limited to, 2-methylimidazole, 2-ethyl-4-methylimidazole, 2-phenylimidazole and 1-benzyl-2-methylimidazole.

These curing agents may be used alone or in combination of two or more.

The content of the curing agent is appropriately adjusted depending on the matrix resin type, and it is not particularly limited. For example, with respect to 100 parts by mass of the resin (the base material), the content of the curing agent may be from 5 parts by mass to 120 parts by mass.

The resin composition may be cured by, for example, applying the resin composition to a support, drying the applied resin composition as needed, and then curing the dried resin composition in a curing condition.

As the material of the support, examples include, but are not limited to, a resin such as polyethylene terephthalate and polyethylene naphthalate, and a metal such as copper, aluminum, nickel, chromium, gold and silver. The surface of the support may be coated with a release agent.

The resin composition can be applied by a known method. As the method, examples include, but are not limited to, dip coating, roll coating, curtain coating, die coating, slit coating and gravure coating.

When the resin composition contains the solvent, the resin composition of the present disclosure is preferably dried after the application of the resin composition. From the viewpoint of removal of the solvent while the resin composition is in an uncured or semi-cured state, the drying temperature is preferably a temperature at which the resin composition is not cured, and it is generally 20°C or more and 200°C or less, and preferably 30°C or more and 150°C or less. The drying time is generally 30 seconds or more and 1 hour or less, and preferably 1 minute or more and 30 minutes or less.

The curing temperature of the resin composition is appropriately adjusted depending on the type of the matrix resin, and it is not particularly limited. In the case of the thermosetting resin, the curing temperature is generally 30°C or more and 400°C or less, preferably 70°C or more and 300°C or less, and more preferably 100°C or more and 200°C or less. The heating method is not particularly limited. For example, an electric oven may be used.

The curing time is generally 5 minutes or more and 5 hours or less, and preferably 30 minutes or more and 3 hours or less.

In the resin structure of the present disclosure, which is obtained by melt-kneading the hollow particles of the present disclosure and the thermoplastic resin and molding the resulting mixture, the thermoplastic resin is not particularly limited, and a conventionally-known thermoplastic resin can be used as the thermoplastic resin. As the thermoplastic resin, examples include, but are not limited to, those exemplified above as the thermoplastic resin that is applicable to the resin composition of the present disclosure. They may be used alone or in combination of two or more.

The melt-kneading temperature is not particularly limited, as long as it is a temperature at which the thermoplastic resin used can be melted. It may be 150°C or more, from the point of view that the effects by the hollow particles of the present disclosure can be easily exerted. From the viewpoint of suppressing the collapse of the hollow particles, it is preferably 300°C or less.

The melt-kneading can be carried out by a known method, and it is not particularly limited. For example, it can be carried out by use of a kneader such as a uniaxial or biaxial kneader.

The molding method is not particularly limited, and a known molding method such as extrusion molding, injection molding and press molding can be employed.

In the resin structure of the present disclosure, the content of the matrix resin contained therein is not particularly limited. From the viewpoint of suppressing a deterioration in the properties of the resin structure and increasing the mechanical strength thereof, the content of the matrix resin is preferably 30% by volume or more, and more preferably 40% by volume or more. From the viewpoint of sufficiently containing the hollow particles, it is preferably 90% by volume or less, and more preferably 80% by volume or less.

The content of the hollow particles contained in the resin structure of the present disclosure is not particularly limited. The content of the hollow particles is preferably 10% by volume or more, and more preferably 20% by volume or more as the lower limit. On the other hand, it is preferably 70% by volume or less, and more preferably 60% by volume or less as the upper limit. When the content of the hollow particles is equal to or more than the lower limit value, excellent effects are exerted by the hollow particles, such as the effect of reducing the weight of the resin structure and the effect of heat insulation. When the content of the hollow particles is equal to or less than the upper limit value, the matrix resin can be sufficiently contained in the resin structure; therefore, a deterioration in the properties of the resin structure can be suppressed, and the mechanical strength can be increased.

As needed, the resin structure of the present disclosure may further contain additives. As the additives, those exemplified above as the additives that are applicable to the above-described resin composition of the present disclosure, may be used.

The resin structure of the present disclosure may contain organic or inorganic reinforcing fibers such as carbon fibers, glass fibers, aramid fibers, polyethylene fibers, cellulose nanofibers and liquid crystal polymer (LCP) fibers.

The form of the resin structure is not particularly limited, and it may be any kind of formable form such as a sheet form, a film form and a plate form. When the resin structure contains fibers, the fibers in the resin structure may be in the form of non-woven fabric, or the resin structure of the present disclosure may be a structure obtained by adding the hollow particles of the present disclosure to a fiber reinforced plastic.

As the applications of the resin composition and resin structure of the present disclosure, examples include, but are not limited to, those in which the resin composition or the resin structure can be used, among the above-mentioned applications of the hollow particles of the present disclosure. More specifically, examples include, but are not limited to, various kinds of components used in various kinds of fields such as the automotive field, the electronics field, the electric field, the architecture field, the aviation field and the space field; food containers; footwears such as sports shoes and sandals; components of household appliances; components of bicycles; stationery supplies; tools; filaments of 3D printers; and floating buoyant materials such as syntactic foam.

Examples

Hereinbelow, the present disclosure is described more specifically using examples and comparative examples. However, the present disclosure is not limited to these examples. Also, "part (s) " and "%" are on a mass basis unless otherwise specified.

[Example 1]

(1) Mixture liquid preparation step

First, the following materials were mixed to produce an oil phase.

1,1-(Bisacryloyloxymethyl)ethyl isocyanate 36.4 parts

    Pentaerythritol (solubility in water at 15°C: 56 g/L, molecular weight: 136.15) 9.1 parts
    t-Butylperoxy diethylacetate (an oil-soluble polymerization initiator) 1.2 parts
    Hydrophobic solvent (cyclohexane) 54.5 parts

In a stirring tank, at room temperature, an aqueous solution in which 5.49 parts of sodium hydroxide (an alkali metal hydroxide) was dissolved in 55 parts of deionized water, was gradually added under stirring to an aqueous solution in which 7.83 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended with a disperser (product name: HOMOMIXER, manufactured by PRIMIX Corporation) at a rotational frequency of 4,000 rpm for one minute, thereby preparing a suspension in which shell material composition droplets including the hydrophobic solvent were dispersed in water.

(3) Polymerization step

In a nitrogen atmosphere, the suspension obtained in the suspension step was stirred for 7 hours under a temperature condition of 89°C to perform a polymerization reaction, thereby obtaining a precursor composition in which precursor particles including the hydrophobic solvent were dispersed in water.

(4) Washing step and solid-liquid separation step

The precursor composition was washed with dilute sulfuric acid (23°C, 10 minutes) to bring the pH of the composition to 5.5 or less. Next, water was separated therefrom by filtration. Then, 200 parts of deionized water was added to reslurry the resultant, and a water washing treatment (washing, filtration and dehydration) was repeatedly performed several times at room temperature (23°C). The resultant was separated by filtration, thereby obtaining a solid component. The obtained solid component was dried with a dryer at 40°C, thereby obtaining the precursor particles including the hydrophobic solvent.

(5) Solvent removal step

The precursor particles obtained in the solid-liquid separation step were subjected to a heating treatment for 12 hours with a vacuum dryer in the condition of 200°C and a nitrogen atmosphere, thereby removing the included hydrophobic solvent from the particles. Accordingly, the hollow particles of Example 1 were obtained.

[Examples 2 to 12 and Comparative Examples 3 and 4]

The hollow particles of Examples 2 to 12 and Comparative Examples 3 and 4 were obtained in the same manner as Example 1, except that in "(1) Mixture liquid preparation step", at least one selected from the group consisting of the type and amount of the shell material added to the oil phase, the amount of the added hydrophobic solvent and that of the added polymerization initiator, was changed according to Table 1 or 2.

The details of the materials used in Examples 2 to 12 and Comparative Examples 3 and 4 are as follows.

· Hexamethylenediamine (solubility in water at 15°C: 500 g/L, molecular weight: 116.20)
· Acrylic polymer polyol (product name: ARUFON (registered trademark) UH-2000, manufactured by Toagosei Co., Ltd., Mw: 11000)
· EBECRYL 4738 (product name: EBECRYL 4738, a urethane acrylate oligomer manufactured by Daicel-Allnex Ltd.)
· 2-Hydroxy-1,3-dimethacryloxypropane (molecular weight: 228.24)
· EGDMA (Ethylene glycol dimethacrylate)
· Polyester polyol (product name: POLYLITE OD-X-2420, manufactured by DIC Corporation, molecular weight: 2000)
· Polyether polyol A (product name: ADEKA POLYETHER P SERIES, manufactured by ADEKA Corporation, composition: PG-PO based) (a polyether polyol obtained by addition polymerization of propylene oxide to propylene glycol)
· Polyvalent epoxy (product name: DENACOL EX-201, manufactured by Nagase ChemteX Corporation, compound name: resorcinol diglycidyl ether, molecular weight: 222.24)
· Ethylene glycol (miscible with water, molecular weight: 62.07)

[Comparative Example 1]

Comparative Example 1 corresponds to Example 1 in Patent Document 1.

The following materials were mixed to prepare an oil phase.

· Aromatic polyisocyanate (product name: BURNOCK (registered trademark) D-750, a tolylene diisocyanate trimethylolpropane adduct manufactured by DIC Corporation) 49.5 parts by mass Polyether polyol B (product name: ADEKA POLYETHER EPD-300, manufactured by ADEKA Corporation, compound name: N,N,N',N'-tetrakis(2-hydroxypropyl)ethylenediamine) 0.5 parts by mass
· Limonene 50 parts by mass

Next, a mixture liquid was prepared by adding 100 parts by mass of the obtained oil phase to 100 parts by mass of a 5% by mass aqueous solution of polyvinyl alcohol. The obtained mixture liquid was stirred at a rotational frequency of 1400 rpm and heated to 70°C, thereby obtaining a precursor composition in which precursor particles including the hydrophobic solvent were dispersed in water. The precursor particles were powdered by use of a spray dryer. Then, the powdered precursor particles were subjected to a heating treatment for 3 hours in a dry oven at 200°C, thereby removing the included limonene from the particles. Accordingly, the hollow particles of Comparative Example 1 were obtained.

[Comparative Example 2]

Comparative Example 2 corresponds to Example 1 in Patent Document 3.

First, the following materials were mixed to prepare an oil phase.

· Trimethylolpropane triacrylate 19 parts by mass
· Methacrylic acid 1 part by mass

· Polymerization initiator (2,2-azobis(2-methylbutyronitrile)) 0.4 parts by mass
· Toluene 56 parts by mass
· Hexane 24 parts by mass

Next, a mixture liquid was prepared by adding the obtained oil phase to an aqueous solution of 5 parts by mass of polyvinyl alcohol in 400 parts by mass of distilled water. The obtained mixture liquid was stirred at a rotational frequency of 1000 rpm and heated to 70°C, thereby obtaining a precursor composition in which precursor particles including the hydrophobic solvent were dispersed in water. The obtained precursor composition was filtered for removal of water, thereby separating the precursor particles. The obtained precursor particles were repeatedly subjected to a water washing treatment (washing, filtering and dehydrating) several times. Then, the precursor particles were dried with a dryer at 40°C, thereby obtaining the precursor particles including the hydrophobic solvent. Then, the precursor particles were subjected to a heating treatment for 12 hours with a vacuum dryer in the condition of 200°C and a nitrogen atmosphere, thereby removing the included hydrophobic solvent from the particles. Accordingly, the hollow particles of Comparative Example 2 were obtained.

[Evaluation]

The hollow particles obtained in the examples and the comparative examples were measured and evaluated as follows. The results are shown in Tables 1 and 2.

<Measurement or evaluation of the hollow particles>

1.IR spectrum measurement

An infrared absorption spectrum was obtained by measuring the hollow particles by ATR-FTIR. From the obtained infrared absorption spectrum, the absorbance ratio (A1/A2) of the absorbance A1, which was the absorbance at the maximum peak in a range of from 1500 cm$^{-1}$ to 1550 cm$^{-1}$, to the absorbance A2, which was the absorbance at the maximum peak in a range of from 1700 cm$^{-1}$ to 1750 cm$^{-1}$, was calculated. The infrared absorption spectrum was measured by a Fourier transform infrared spectrophotometer (product name: NICOLET iS5 FT-IR SPECTROPHOTOMETER, manufactured by Thermo Fisher Scientific K.K.) connected with an ATR accessory (product name: iD5 ATR ACCESSORY FOR NICOLET iS5 SPECTROPHOTOMETER, manufactured by Thermo Fisher Scientific K.K.) The absorbance ratio (A1/A2) was calculated as a peak top intensity ratio.
The ATR-FTIR measurement conditions were as follows.

<Measurement conditions>

High refractive index crystal: Diamond with ZnSe lens

Incident angle: 42° ± 1°
Measurement range: 4000 cm$^{-1}$ to 600 cm$^{-1}$
Wave number dependence of measurement depth: Not corrected
Number of times of reflection: 1
Detector: DTGS
KBr resolution: 4 cm$^{-1}$
Accumulated number of times: 16

Others:

In the above conditions, the infrared absorption was measured with no contact with the sample, and the thus-measured spectrum was used as a background. In the sample measurement, the measured data was processed so that the background was not involved in the measured spectrum. Since the intensity of the infrared absorption spectrum obtained by the measurement might vary depending on the adhesion degree between the sample and the high refractive index crystal in the ATR method, the measurement was performed with a nearly uniform adhesion degree by applying the maximum load that the ATR accessory was able to apply.

2. Void ratio

2-1. Measurement of the apparent density of the hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ ($g/cm^3$) of the hollow particles was calculated by the following formula (I).

Apparent density $D_1$ = [Mass of the hollow particles]/ (100 - [Mass of the isopropanol]/[Specific gravity of the --> isopropanol at the measuring temperature])                Formula (I)

2-2. Measurement of the true density of the hollow particles

The hollow particles were pulverized in advance; approximately 10 g of the pulverized hollow particles were introduced into a measuring flask with a volume of 100 $cm^3$; and the mass of the introduced pulverized particles were precisely weighed.
Then, similarly to the measurement of the apparent density mentioned above, isopropanol was added to the measuring flask; the mass of the isopropanol was precisely weighed; and the true density $D_0$ ($g/cm^3$) of the hollow particles was calculated by the following formula (II).

True density $D_0$ = [Mass of the pulverized hollow particles]/(100 - [Mass of the isopropanol]/[Specific gravity of the isopropanol at the measuring temperature])                Formula (II)

2-3. Calculation of void ratio

The void ratio of the hollow particles was calculated by the following formula (III) using the apparent density $D_1$ and the true density $D_0$.

Void ratio (%) = 100 - (Apparent density $D_1$/True density $D_0$) $\times$ 100                Formula (III)

3. Micro compression breaking strength

With reference to JIS R1639-5, the micro compression breaking strength of the hollow particles was measured by use of a micro compression testing machine (model: MCT-510, manufactured by Shimadzu Corporation) at a measurement temperature of 23°C or 150°C in the following conditions.

<Measurement conditions>

Maximum test force: 2.000 mN
Loading rate: 0.0466 mN/s
Humidity: 45% RH $\pm$ 5% RH
Indenter shape: Truncated cone shape (flat indenter)
Indenter tip size: $\varphi$ 200 $\mu$m
Indenter material: Diamond
Number of measured particles: 10

4. Average circularity

A mixed solution was obtained by adding 0.10 g to 0.12 g of the hollow particles to a linear alkylbenzene sulfonate aqueous solution (concentration 0.3%) and subjected to a dispersion treatment for 5 minutes by an ultrasonic cleaner, thereby preparing a measurement sample. Using a flow particle image analyzer (product name: IF-3200, manufactured by JASCO International Co., Ltd.), out of the particles contained in the measurement sample, 1000 to 3000 particles were measured for circularity in the following measurement conditions. The arithmetic mean value of the measured circularities was determined as the average circularity.

(Measurement conditions)

Thickness of the spacer of a flow cell: 50 $\mu$m
Telecentric zoom lens magnification: 4.5 x
Total magnification: 9.0 x
Measured amount: 0.5 mL
Image resolution: 0.185 $\mu$m/pixel
Detection algorithm: Ghost detection
Threshold: 15%

5. Particle diameter and particle size distribution

The particle size distribution of the hollow particles on volumetric basis was obtained by use of a particle size distribution measuring device by the Coulter counter method (product name: MULTISIZER 4e, manufactured by Beckman Coulter, Inc.) Then, D50 (the particle diameter at 50% cumulative volume) and D90 (the particle diameter at 90% cumulative volume) were obtained, and the ratio of D90 to D50 (D90/D50) was calculated.
The measurement conditions were as follows.

Aperture diameter: 50 $\mu$m
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

**6.** Thermal decomposition temperature

The thermal decomposition temperature of the hollow particles was measured by use of a thermogravimetric/differential thermal analyzer (product name: TG/DTA6200, autosampler: AST-2, manufactured by Seiko Instruments, Inc.) The sampling method and the temperature condition were as follows. First, 10.5 mg $\pm$ 0.5 mg of the hollow particles were tightly packed into the bottom of a measurement container made of platinum and used as a measurement sample. At a nitrogen gas flow rate of 230 mL/min, the temperature of the sample was increased from 30°C to 500°C at a temperature increasing rate of 10°C/min to obtain a TG/DTA curve. Using an analysis software included the analyzer, the 5% weight reduction temperature of the hollow particles was calculated and determined as the thermal decomposition temperature.

7. Void retention rate after injection molding

On a hot plate heated to 200°C or more, 0.2 g of the hollow particles and 0.8 g of a polypropylene (product name: NOVATEC PP MA1B, manufactured by Japan Polypropylene Corporation) were melted and mixed to obtain a mixture. The obtained mixture was poured into a mold (manufactured by AS ONE Corporation, diameter 14 mm) for hot press machines, and the mold was placed in a dryer at 230°C and heated for 15 minutes. Then, the mold was removed from the dryer and placed at a hot press machine (model: H300-15, manufactured by AS ONE Corporation) set to 90°C. A cylinder at 90°C was put in the mold. At the time the temperature of the mold surface decreased to 130°C, a press pressure of 30 MPa was applied to produce a resin structure. At this time, the cylinder pressure of the press machine was set to 2 MPa. From the amount and apparent density $D_1$ of the added hollow particles, the amount and specific gravity of the added matrix resin, and the specific gravity of the obtained resin structure, the void retention rate (%) of the hollow particles after the injection molding was calculated. It can be evaluated that as the void retention rate of the hollow particles after the injection molding increases, the pressure resistance of the hollow particles at high temperature improves.

[Table 1]

Table 1

| | | | Example 1 | Example 2 | Example 3 | Example 4 |
|---|---|---|---|---|---|---|
| Shell material | Isocyanate group-containing compound | Type | 1,1-(Bisacryloyloxymethyl) ethyl isocyanate | 1,1-(Bisacryloyloxymethyl) ethyl isocyanate | 1,1-(Bisacryloyloxymethyl) ethyl isocyanate | 2-(2-Methacryloyloxyethyloxy)ethyl isocyanate |
| | | Parts | 36.4 | 36.4 | 36.4 | 245 |
| | Active hydrogen compound | Type | Pentaerythritol | Hexamethylenediamine | Acrylic polymer polyol | Pentaerythritol |
| | | Parts | 9.1 | 9.1 | 9.1 | 20 |
| | Urethane acrylate | Type | | | | |
| | | Parts | | | | |
| | (Meth)acryloyl group-containing compound | Type | | | | |
| | | Parts | | | | |
| | Others | Type | | | | |
| | | Parts | | | | |
| Hydrophobic solvent | Cyclohexane | Parts | 545 | 545 | 545 | 545 |
| Polymerization initiator | t-Butylperoxy diethylacetate | Parts | 1.2 | 1.2 | 1.2 | 1.2 |
| Hollow particles | Shell | | Urethane-acrylic hybrid polymer | Urea-acrylic hybrid polymer | Urethane-acrylic hybrid polymer | Urethane-acrylic hybrid polymer |
| | Absorbance ratio (A1/A2) in ATR-FTIR | | 0.36 | 0.30 | 0.31 | 0.23 |
| | Void ratio | % | 65 | 65 | 65 | 65 |
| | Micro compression breaking strength | 23°C (MPa) | 26.4 | 21.6 | 23.3 | 16.4 |
| | | 150°C (MPa) | 21.3 | 19.7 | 15.6 | 10.1 |
| | Average circularity | | 0.97 | 0.95 | 0.96 | 0.97 |
| | D50 | μm | 10.7 | 10.7 | 12.2 | 10.1 |

(continued)

|  |  | Example 1 | Example 2 | Example 3 | Example 4 |
|---|---|---|---|---|---|
| D90 | μm | 14.1 | 15.1 | 16.9 | 15.0 |
| D90/D50 |  | 1.32 | 1.41 | 1.39 | 1.49 |
| Thermal decomposition temperature | °C | 353 | 350 | 330 | 305 |
| Void retention rate after PP injection molding | % | 99 | 99 | 94 | 67 |

Table1-continued (1)

| | | | Example 5 | Example 6 | Example 7 | Example 8 |
|---|---|---|---|---|---|---|
| Shell material | Isocyanate group-containing compound | Type | | Hexamethylene diisocyanate | | 1,1-(Bisacryloyloxymethyl)ethyl isocyanate |
| | | Parts | | 25.5 | | 21.44 |
| | Active hydrogen compound | Type | | 2-Hydroxy-1,3-dimethacryloxypropane | | Pentaerythritol |
| | | Parts | | 20 | | 5.36 |
| | Urethane acrylate | Type | EBECRYL 4738 | | EBECRYL 4738 | |
| | | Parts | 45.5 | | 31.4 | |
| | (Meth)acryloyl group-containing compound | Type | | | | |
| | | Parts | | | | |
| | Others | Type | | | DVB | |
| | | Parts | | | 5 | |
| Hydrophobic solvent | Cyclohexane | Parts | 545 | 545 | 545 | 73.2 |
| Polymerization initiator | t-Butylperoxy diethylacetate | Parts | 1.2 | 1.2 | 1.2 | 1.2 |
| | Shell | | Urethane-acrylic hybrid polymer | Urethane-acrylic hybrid polymer | Urethane-acrylic hybrid polymer | Urethane-acrylic hybrid polymer |
| | Absorbance ratio (A1/A2) in ATR-FTIR | | 0.22 | 0.38 | 0.20 | 0.35 |
| | Void ratio | % | 65 | 65 | 65 | 80 |
| | Micro compression breaking strength | 23°C (MPa) | 14.6 | 22.2 | 17.7 | 10.2 |
| | | 150°C (MPa) | 9.5 | 18.5 | 12.1 | 7.2 |
| Hollow particles | Average circularity | | 0.94 | 0.96 | 0.95 | 0.92 |
| | D50 | μm | 17.1 | 11.3 | 14.2 | 8.8 |
| | D90 | μm | 25.2 | 15.5 | 19.2 | 12.0 |
| | D90/D50 | | 1.47 | 1.37 | 1.35 | 1.36 |

34

(continued)

| | | Example 5 | Example 6 | Example 7 | Example 8 |
|---|---|---|---|---|---|
| Thermal decomposition temperature | °C | 310 | 312 | 301 | 348 |
| Void retention rate after PP injection molding | % | 67 | 94 | 72 | 49 |

Table 1-continued (2)

| | | | Example 9 | Example 10 | Example 11 | Example 12 |
|---|---|---|---|---|---|---|
| Shell material | Isocyanate group-containing compound | Type | Hexamethylene diisocyanate | 1,1-(Bisacryloyloxymethyl) ethyl isocyanate | 1,1-(Bisacryloyloxymethyl) ethyl isocyanate | 1,1-(Bisacryloyloxymethyl) ethyl isocyanate |
| | | Parts | 25.5 | 36.4 | 36.4 | 36.4 |
| | Active hydrogen compound | Type | Pentaerythritol | Polyester polyol | Polyether polyol A | Polyvalent epoxy |
| | | Parts | 10 | 9.1 | 9.1 | 9.1 |
| | Urethane acrylate | Type | | | | |
| | | Parts | | | | |
| | (Meth)acryloyl group-containing compound | Type | EGDMA | | | |
| | | Parts | 10 | | | |
| | Others | Type | | | | |
| | | Parts | | | | |
| Hydrophobic solvent | Cyclohexane | Parts | 545 | 545 | 545 | 545 |
| Polymerization initiator | t-Butylperoxy diethylacetate | Parts | 1.2 | 2.2 | 3.2 | 4.2 |
| Hollow particles | Shell | | Polyurethane, Acrylic polymer | Urethane-acrylic hybrid polymer | Urethane-acrylic hybrid polymer | Urethane-acrylic hybrid polymer |
| | Absorbance ratio (A1/A2) in ATR-FTIR | | 0.16 | 0.34 | 0.32 | 0.39 |
| | Void ratio | % | 65 | 65 | 65 | 65 |
| | Micro compression breaking strength | 23°C (MPa) | 10.4 | 17.7 | 16.0 | 19.4 |
| | | 150°C (MPa) | 7.5 | 12.9 | 12.0 | 13.5 |
| | Average circularity | | 0.91 | 0.93 | 0.92 | 0.92 |
| | D50 | μm | 11.1 | 10.8 | 12.2 | 9.1 |
| | D90 | μm | 15.0 | 15.2 | 19.0 | 14.8 |
| | D90/D50 | | 1.35 | 1.41 | 1.56 | 1.63 |

(continued)

| | | Example 9 | Example 10 | Example 11 | Example 12 |
|---|---|---|---|---|---|
| Thermal decomposition temperature | °C | 301 | 323 | 309 | 344 |
| Void retention rate after PP injection molding | % | 49 | 73 | 73 | 81 |

[Table 2]

[Table 2]

Table 2

| | | | Comparative Example 1 | Comparative Example 2 | Comparative Example 3 | Comparative Example 4 |
|---|---|---|---|---|---|---|
| Shell material | Isocyanate group-containing compound | Type | Aromatic polyisocyanate | | 2-(2-Methacryloyloxyethyloxy) ethyl isocyanate | 2-(2-Methacryloyloxyethyloxy) ethyl isocyanate |
| | | Parts | 49.5 | | 10 | 245 |
| | Active hydrogen compound | Type | Polyether polyol B | | Pentaerythritol | Ethylene glycol |
| | | Parts | 0.5 | | 35.5 | 20 |
| | (Meth)acryloyl group-containing compound | Type | | Trimethylolpropane triacrylate | | |
| | | Parts | | 19 | | |
| | | Type | | Methacrylic acid | | |
| | | Parts | | 1 | | |
| Hydrophobic solvent | | Type | Limonene | Toluene | Cyclohexane | Cyclohexane |
| | | Parts | 50 | 56 | 545 | 545 |
| | | Type | | Hexane | | |
| | | Parts | | 24 | | |
| Polymerization initiator | | Type | | 2,2-Azobis(2-methylbutyronitrile) | t-Butylperoxy diethylacetate | t-Butylperoxy diethylacetate |
| | | Parts | | 0.4 | 1.2 | 1.2 |
| | Shell | | Polyurethane | Acrylic polymer | Urethane-acrylic hybrid polymer | Urethane-acrylic hybrid polymer |
| | Absorbance ratio (A1/A2) in ATR-FTIR | | - | - | 0.14 | 0.09 |
| | Void ratio | % | 45 | 80 | 65 | 65 |
| | Micro compression breaking strength | 23°C (MPa) | 10.3 | 6.5 | 7.7 | 6.5 |
| | | 150°C (MPa) | 4.8 | 3.2 | 3.2 | 3.7 |

EP 4 596 590 A1

(continued)

| | | | Comparative Example 1 | Comparative Example 2 | Comparative Example 3 | Comparative Example 4 |
|---|---|---|---|---|---|---|
| Hollow particles | Average circularity | | 0.91 | 0.90 | 0.88 | 0.91 |
| | D50 | $\mu$m | 14.8 | 11.4 | 13.6 | 16.1 |
| | D90 | $\mu$m | 21.1 | 25.0 | 20.0 | 27.1 |
| | D90/D50 | | 1.43 | 2.19 | 1.47 | 1.92 |
| | Thermal decomposition temperature | °C | 272 | 259 | 291 | 288 |
| | Void retention rate after PP injection molding | % | 26 | 26 | 26 | 26 |

From the SEM observation results and the void ratio values, it was confirmed that the hollow particles obtained in the Examples and the Comparative Examples were spherical particles having only one hollow portion. Of the hollow particles obtained in each of the Examples, the percentage of the particles having only one hollow portion was 90% or more.

[Consideration]

In Comparative Example 1, while an acrylic polymer type surfactant was used as the active hydrogen compound, a polymerization reaction of an acryloyl group was not carried out. Accordingly, the hollow particles obtained in Comparative Example 1 were those in which, while the shell-forming resin contained the urethane bond, the resin did not contain the structure formed by polymerization of a (meth)acryloyl group. As a result, the hollow particles obtained in Comparative Example 1 had a low thermal decomposition temperature and thus had poor heat resistance. In addition, compared to the micro compression breaking strength at 23°C, the micro compression breaking strength at 150°C was remarkably low; the void retention rate after PP injection molding was also low; and the pressure resistance was likely to deteriorate at high temperature, accordingly.

The hollow particles obtained in Comparative Example 2 were those in which, while the shell-forming resin contained the structure formed by polymerization of a (meth)acryloyl group, the resin contained neither the urethane bond nor the urea bond. Also, the D90/D50 ratio of the hollow particles obtained in Comparative Example 2 was more than 1.70. As a result, the hollow particles obtained in Comparative Example 2 had a low thermal decomposition temperature and thus had poor heat resistance. In addition, the micro compression breaking strength at 23°C was low; the pressure resistance was poor, accordingly; compared to the micro compression breaking strength at 23°C, the micro compression breaking strength at 150°C was remarkably low; the void retention rate after PP injection molding was also low; and the pressure resistance was likely to deteriorate at high temperature, accordingly.

The hollow particles obtained in Comparative Example 3 were those in which, while the shell-forming resin contained the urethane bond and the structure formed by polymerization of a (meth)acryloyl group, the average circularity was less than 0.90. The hollow particles obtained in Comparative Example 3 had a low thermal decomposition temperature and thus had poor heat resistance. In addition, the micro compression breaking strength at 23°C was low; the pressure resistance was poor, accordingly; compared to the micro compression breaking strength at 23°C, the micro compression breaking strength at 150°C was remarkably low; the void retention rate after PP injection molding was also low; and the pressure resistance was likely to deteriorate at high temperature, accordingly. In Comparative Example 3, it was estimated that since the polymerization reaction did not sufficiently proceed in the shell, the particles deformed, and the average circularity was less than 0.90, accordingly. The hollow particles of Comparative Example 3 were estimated as follows: since the polymerization reaction did not sufficiently proceed in the shell and, as a result, the crosslinking density of the shell was low, the thermal decomposition temperature was low, and the pressure resistance was likely to deteriorate at high temperature.

The hollow particles obtained in Comparative Example 4 were those in which, while the shell-forming resin contained the urethane bond and the structure formed by polymerization of a (meth)acryloyl group, the D90/D50 ratio was more than 1.70, and the coarse powder amount was large. The hollow particles obtained in Comparative Example 4 had a low thermal decomposition temperature and thus had poor heat resistance. In addition, the micro compression breaking strength at 23°C was low; the pressure resistance was poor, accordingly; compared to the micro compression breaking strength at 23°C, the micro compression breaking strength at 150°C was remarkably low; the void retention rate after PP injection molding was also low; and the pressure resistance was likely to deteriorate at high temperature, accordingly. In Comparative Example 4, it was estimated that the reaction between the particles progressed to produce coarse particles, thereby obtaining a D90/D50 ratio of more than 1.70. The hollow particles of Comparative Example 4 were estimated as follows: due to the progress of the reaction between the particles, the polymerization reaction did not sufficiently proceed in the shell and, as a result, the crosslinking density of the shell was low; therefore, the thermal decomposition temperature was low, and the pressure resistance was likely to deteriorate at high temperature.

In the hollow particles obtained in the Examples, the shell-forming resin contained at least one selected from the group consisting of a urethane bond and a urea bond, and the structure formed by polymerization of a (meth)acryloyl group; the average circularity was 0.90 or more; and the D90/D50 ratio was 1.70 or less. Accordingly, the hollow particles of the Examples had a high thermal decomposition temperature and thus excellent heat resistance. In addition, the micro compression breaking strength at 23°C was high; the pressure resistance was excellent, accordingly; a decrease in the micro compression breaking strength at 150°C when compared to the micro compression breaking strength at 23°C, was suppressed; the void retention rate after PP injection molding was also high; and a deterioration in the pressure resistance at high temperature was suppressed, accordingly. The shell of the hollow particles obtained in Examples 1 and 3 to 12 contained the urethane bond and the structure formed by polymerization of a (meth)acryloyl group, and the shell of the hollow particles obtained in Example 2 contained the urea bond and the structure formed by polymerization of an acryloyl group.

For the hollow particles of Examples 1 to 8 and 10 to 12, in which the shell-forming resin was a urethane-acrylic hybrid polymer, the thermal decomposition temperature or the void retention rate after PP injection molding was particularly high, and the heat resistance or the pressure resistance at high temperature was excellent, accordingly.

As for the hollow particles of Examples 1 to 3, in which the mixture of an isocyanate group-containing polyfunctional (meth)acrylate and at least one active hydrogen compound selected from the group consisting of a polyamine, an aliphatic polyol and a (meth)acrylic polymer polyol was used as the shell material, and as for the hollow particles of Example 6, in which the mixture of a polyisocyanate and a hydroxy group-containing (meth)acrylate was used as the shell material, the micro compression breaking strength at 150°C was 15.0 MPa or more; the void retention rate after PP injection molding was 90% or more; and the pressure resistance at high temperature was particularly excellent, accordingly.

Reference Signs List

1. Aqueous medium
2. Low polarity material
3. Droplet of shell material composition
4a. Hydrophobic solvent
4b. Material not containing hydrophobic solvent
5. Precursor particles
6. Shell
7. Hollow portion
10. Hollow particle having a hollow portion filled with gas

## Claims

1. Hollow particles comprising a shell, which contains a resin, and a hollow portion surrounded by the shell,

   wherein the resin contains at least one selected from the group consisting of a urethane bond and a urea bond, and a structure formed by polymerization of a (meth)acryloyl group;
   wherein the hollow particles have an average circularity of 0.90 or more;
   wherein a ratio (D90/D50) of D90, which is a particle diameter at 90% cumulative volume of the hollow particles, to D50, which is a particle diameter at 50% cumulative volume of the hollow particles, is 1.70 or less; and
   wherein a breaking strength of the hollow particles when compressed by a micro compression testing machine at a temperature of 150°C, a maximum compression breaking test force of 2000 mN and a loading rate of 0.0466 mN/s, is 5.0 MPa or more.

2. The hollow particles according to Claim 1, wherein, in an infrared absorption spectrum obtained by measuring the hollow particles by ATR-FTIR, an absorbance ratio (A1/A2) of an absorbance A1, which is an absorbance at a maximum peak in a range of from 1500 cm$^{-1}$ to 1550 cm$^{-1}$, to an absorbance A2, which is an absorbance at a maximum peak in a range of from 1700 cm$^{-1}$ to 1750 cm$^{-1}$, is 0.1 or more and 0.5 or less.

3. The hollow particles according to Claim 1 or 2, wherein the urea bond is a urea bond formed by a reaction of a polyamine with an isocyanate group-containing compound.

4. The hollow particles according to Claim 1 or 2,

   wherein the urethane bond is a urethane bond formed by a reaction of at least one active hydrogen compound selected from the group consisting of a hydroxy group-containing compound and an epoxy group-containing compound with an isocyanate group-containing compound, and
   wherein the hydroxy group-containing compound is at least one selected from the group consisting of a polyester polyol, a polyether polyol, an aliphatic polyol, a (meth)acrylic polymer polyol and a hydroxy group-containing (meth)acrylate, and the epoxy group-containing compound is a polyvalent epoxy compound.

5. The hollow particles according to Claim 1 or 2, wherein the hollow particles have a void ratio of 60% or more and 85% or less.

6. A method for producing the hollow particles defined by any one of Claims 1 to 5, the method comprising:

preparing a mixture liquid containing a shell material, a hydrophobic solvent, a dispersion stabilizer and an aqueous medium,

suspending the mixture liquid to prepare a suspension in which droplets of a shell material composition containing the shell material and the hydrophobic solvent are dispersed in the aqueous medium,

polymerizing the shell material to form precursor particles comprising a shell, which contains a resin, and a hollow portion, which is surrounded by the shell and filled with the hydrophobic solvent, and

removing the hydrophobic solvent from the precursor particles,

wherein the shell material comprises at least one selected from the group consisting of:

(i) a mixture of an isocyanate group-containing compound and an active hydrogen compound,

wherein at least one of the compounds contains a (meth)acryloyl group;

wherein the active hydrogen compound is at least one selected from the group consisting of an amino group-containing compound, a hydroxy group-containing compound and an epoxy group-containing compound; and

wherein at least one of a condition that the isocyanate group-containing compound contains two or more isocyanate groups per molecule, or a condition that the active hydrogen compound contains, per molecule, two or more groups of at least one kind selected from the group consisting of amino, hydroxy and epoxy groups, is satisfied,

(ii) at least one selected from the group consisting of a urethane bond-containing (meth)acrylate and a urea bond-containing (meth)acrylate, and

(iii) a mixture of an isocyanate group-containing compound, an active hydrogen compound and a (meth) acryloyl group-containing compound,

wherein the active hydrogen compound is at least one selected from the group consisting of an amino group-containing compound, a hydroxy group-containing compound and an epoxy group-containing compound, and

wherein, in the polymerization of the shell material, at least one selected from the group consisting of the following reactions proceeds:

a reaction of the isocyanate group with at least one selected from the group consisting of the amino group, the hydroxy group and the epoxy group, and

a radical polymerization reaction of the (meth)acryloyl group.

7. A resin composition comprising the hollow particles defined by any one of Claims 1 to 5 and a matrix resin.

8. A resin structure comprising the hollow particles defined by any one of Claims 1 to 5 and a matrix resin, wherein a content of the hollow particles is 10% by volume or more and 70% by volume or less.

9. The resin structure according to Claim 8, wherein the matrix resin is an epoxy resin.

10. A method for producing a resin structure, the method comprising:

preparing a resin composition containing the hollow particles defined by any one of Claims 1 to 5, a matrix resin and a curing agent, and

curing the resin composition,

wherein the matrix resin contains an epoxy resin, and

wherein the curing agent contains at least one selected from the group consisting of an amine, an acid anhydride and an imidazole.

FIG. 1

**EP 4 596 590 A1**

# INTERNATIONAL SEARCH REPORT

| | International application No. |
|---|---|
| | **PCT/JP2023/034061** |

| | |
|---|---|
| **A.** | **CLASSIFICATION OF SUBJECT MATTER** |

*C08F 20/36*(2006.01)i; *C08F 290/14*(2006.01)i; *C08F 299/06*(2006.01)i; *C08F 2/18*(2006.01)i; *C08L 63/00*(2006.01)n
FI: C08F20/36; C08F2/18; C08F290/14; C08F299/06; C08L63/00 C

According to International Patent Classification (IPC) or to both national classification and IPC

| | |
|---|---|
| **B.** | **FIELDS SEARCHED** |

Minimum documentation searched (classification system followed by classification symbols)

C08F20/36; C08F290/14; C08F299/06; C08F2/18; C08L63/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2019/150951 A1 (MATSUMOTO YUSHI-SEIYAKU CO., LTD.) 08 August 2019 (2019-08-08) <br> claim 1, paragraphs [0090]-[0125], examples 5, 7 | 1-10 |
| A | JP 2003-276350 A (FUJI PHOTO FILM CO., LTD.) 30 September 2003 (2003-09-30) <br> paragraphs [0257]-[0259] | 1-10 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2023** | **12 December 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/034061**

| Patent document cited in search report | Publication date (day/month/year) | Patent family member(s) | Publication date (day/month/year) |
|---|---|---|---|
| WO 2019/150951 A1 | 08 August 2019 | US 2021/0363320 A1 claim 1, paragraphs [0232]-[0297], examples 5, 7 CN 111684038 A KR 10-2020-0115541 A | |
| JP 2003-276350 A | 30 September 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019181988 A
- JP 2022117594 A

- JP 2020033503 A

**Non-patent literature cited in the description**

- Kagaku Binran, Kiso Hen, Kaitei 4 Ban. Maruzen Publishing Co., Ltd., 30 September 1993, 498-503